(19) Europäisches Patentamt
European Patent Office
Office européen des brevets

(11) **EP 2 563 724 B1**

(12) **EUROPEAN PATENT SPECIFICATION**

(45) Date of publication and mention
of the grant of the patent:
**12.10.2016 Bulletin 2016/41**

(51) Int Cl.:
*C02F 1/467* (2006.01)      *C02F 1/461* (2006.01)
*C25B 11/03* (2006.01)      *A61L 2/03* (2006.01)
*C02F 1/78* (2006.01)

(21) Application number: **10793338.4**

(22) Date of filing: **29.11.2010**

(86) International application number:
**PCT/JP2010/071770**

(87) International publication number:
**WO 2011/135749 (03.11.2011 Gazette 2011/44)**

(54) **MEMBRANE-ELECTRODE ASSEMBLY, ELECTROLYTIC CELL USING THE SAME, METHOD AND APPARATUS FOR PRODUCING OZONE WATER, METHOD FOR DISINFECTION AND METHOD FOR WASTEWATER OR WASTE FLUID TREATMENT**

MEMBRAN-ELEKTRODEN-ANORDNUNG, ELEKTROLYSEZELLE DAMIT, VERFAHREN UND VORRICHTUNG ZUR HERSTELLUNG VON OZONWASSER, DESINFEKTIONSVERFAHREN UND VERFAHREN ZUR BEHANDLUNG VON ABWASSER ODER SCHMUTZWASSER

ENSEMBLE MEMBRANE-ÉLECTRODE, CELLULE ÉLECTROLYTIQUE L'EMPLOYANT, PROCÉDÉ ET APPAREIL POUR PRODUIRE DE L'EAU OZONISÉE, PROCÉDÉ DE DÉSINFECTION ET PROCÉDÉ DE TRAITEMENT D'EAUX USÉES OU DE DÉCHETS LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.09.2010   JP 2010197148**
**30.04.2010   JP 2010105752**

(43) Date of publication of application:
**06.03.2013   Bulletin 2013/10**

(73) Proprietors:
• **Aquaecos Ltd.**
**Kanagawa 245-0016 (JP)**
• **De Nora Permelec Ltd**
**Fujisawa-shi**
**Kanagawa 252-0816 (JP)**

(72) Inventors:
• **NITTA, Hideo**
**Yokohama-shi**
**Kanagawa 245-0016 (JP)**
• **HOSONUMA, Masashi**
**Fujisawa-shi**
**Kanagawa 252-0816 (JP)**

(74) Representative: **Blodig, Wolfgang**
**Wächtershäuser & Hartz**
**Patentanwaltspartnerschaft mbB**
**Weinstrasse 8**
**80333 München (DE)**

(56) References cited:
**EP-A- 0 080 288       EP-A1- 0 343 122**
**EP-A- 1 111 095       EP-A1- 2 017 229**
**DE-A1- 10 025 167     JP-A- 2009 108 395**
**US-A1- 2007 095 655**

## Description

### Technical Field

The present invention relates to a membrane-electrode assembly, an electrolytic cell using the same, a method and an apparatus for producing ozone water, a method for disinfection and a method for wastewater or waste fluid treatment.

### Background Art

The electrolysis reaction has been industrially utilized for manufacture of chemical substances, such as chlorine and caustic soda, playing as a key role in modern industries. It also is applied for the waste water treatment for the purpose of electrolytic removal of harmful substances. The reaction vessels used for such processes, called electrolyzers or electrolytic cells, usually have a structure of casing which accommodates an anode and a cathodes or n addition to them a solid polymer electrolyte membrane positioned in-between. Most of electrolytic cells have a structure that liquid or gas present on the anode side and the cathode side is physically separated. But, in some electrolytic processes, anolyte and catholyte are required or allowed to be mixed; and electrolytic cells for such processes will have a structure to meet the purpose.

The present invention, belonging to the latter case of the processes in which anolyte and catholyte are mixed and the ionization degree of raw material water is small, relates to a membrane-electrode assembly having a structure of a solid polymer electrolyte membrane interleaved between an anode and a cathode, and to an electrolytic cell applying the membrane-electrode assembly.

Relating to a membrane-electrode assembly, an electrolytic cell using the same, a method and an apparatus for producing ozone water, a method for disinfection and a method for wastewater or waste fluid treatment, the present invention can also provide possible solutions in various applications as well, other than ozone water production, including but not limited to organic electrolytic synthesis, decomposition of organic chlorine compounds containing dioxin, and producing drinking water out of river waters in time of disaster or in developing countries.

Recently, ozone water has been widely applied in medical and food hygienic areas, for semiconductor manufacturing system, etc. for its superior effects of disinfection and degradation activity of organic substances. The production methods are briefly classified into two groups: the gas phase production process by electric discharge in pure oxygen or oxygen-containing gas and the electrochemical process by water electrolysis.

Gas phase production process is superior in energy efficiency, and is used relatively for a large scale production system, running at a high voltage applying pure oxygen. In the gas phase production process, ozone water is obtained through contact with water in a gas liquid reactor.

On the other hand, the electrolysis production method is operated at a low voltage of several 10 volts or less by an electrolytic cell, applying water as raw material, from which ozone water is directory manufactured. This method provides high-concentrated ozone water relatively easily with a simple structural configuration of, basically, electrolytic cells and a power source, suitable for small- or middle-scale production capacity.

In the ozone water production electrolysis using pure water with a low ionization degree, installation of anode and cathode only in the water will not promote electrolysis reaction because of its low ionization degree. For this reason, a solid polymer electrolyte membrane is inserted between the cathode and the anode as a moving path for hydrogen ions, and thus, the electrolytic cell is configured by anode, cathode and solid polymer electrolyte membrane as functional elements.

Ozone is formed by the reaction formula, as below.

Ozone formation reaction (anode) : $3H_2O=O_3+6H^++6e^-$

$$E^0=+1.51V$$

Oxygen formation reaction (anode) : $2H_2O=O_2+4H^++4e^-$

$$E^0=+1.23V$$

Hydrogen formation reaction (cathode) : $2H^++2e^-=H_2$

In the above, the ozone formation reaction is a competitive reaction with the oxygen formation reaction, where oxygen with a lower generation electric potential forms presidentially and, therefore, the electric current efficiently of ozone formation is low.

Moreover, electrolysis is performed at a high potential using lead oxide anode or conductive diamond anode with a high overvoltage to suppress oxygen generation and therefore high electrolysis voltage is required during operation. As a result, the power efficiency, which is the product of current efficiency and voltage efficiency, of ozone water electrolysis is low and its improvement is desired.

Generally, in the conventional types of zone water production electrolysis, the anode side and the cathode side are physically separated by a solid polymer electrolyte membrane and electrolysis is conducted without mixing anolyte and catholyte.

In the electrolytic cell, for instance, anode and cathode are arranged structurally in parallel as shown in PTL 1, etc. and electrolyte passes in parallel with them. Such structure is similarly adopted in PTLs 2 and 3.
Thus, in the systems of conventional types, raw material water flows in parallel with the surfaces of cathode and anode, entering one end of the electrode and draining from the other end.

Therefore, the liquid composition varies with the progress of electrolysis reactions and unless sufficient flow rate is secured, reaction conditions can be different at the inlet and the outlet. This structural inconvenience is especially serious, causing a hydroxide precipitation problem in ozone water production applying non-purified waters, such as public tap water, well water and rain water, as raw material. In the conventional ozone water production applying such non-purified waters, the pH value of catholyte will increase with progress of electrolysis, causing a considerable amount of hydroxide of alkaline earth metals present in a trace amount in the raw material water to precipitate, over the cathode surface on the outlet side where reaction proceeds, to such a degree that electrolysis is hard to continue. To cope with this, operation must be stopped periodically for acid cleaning to remove the precipitate, as described in detail in PTL 4. This problem is commonly seen not only in electrolytic cells of an ordinary structure as shown in PTL 3, but also in those with a special structure as proposed in PTL 5.

In PTLs 6 and 7, the cathode compartment is separated and acid is applied as catholyte to reduce the precipitate, but the structure becomes complicated and additional care for safety operation is required. Whereas, in PTL 8, an alternative method is proposed to recover operation performance through reverse current by inverting the anode/cathode of the electrolytic cells, when the electrolysis properties have deteriorated. In this case, when reverse current is supplied, cathode temporarily works as anode and a trace of constituent metal element elutes. The eluted metal ions permeate into the solid polymer electrolyte membrane, causing its ion transport capacity to deteriorate considerably, and therefore, to prevent metal elements from eluting, it is required that the cathode is prepared with valve metals and an expensive noble metal coating is applied on its surface. In addition, anode which temporarily works as cathode may deteriorate as well.

As a design problem in the conventional electrolytic cells, raw material water enters through the inlet at one end of the electrolytic cell, flows on electrodes in parallel and drains from the outlet at the other end of the electrolytic cell, as shown in PTL 9. Such structural design gives no problem for a installed type system for which adequate installation space is provided, but when the system is to be equipped conveniently on the midway of an existing piping, as in the case of mounting on the tap water line in a house, the structure of such electrolytic cells may interfere with compact design concept.

PTL 10 discloses that in the ozone production system where water is supplied to the catalyst electrode comprising the cation exchange membrane supported by the anode and the cathode in-between, a through-hole communicating the anode electrode and the cathode electrode is provided on the cation exchange membrane at the part facing the raw material water supply route; and waters, such as tap water, from the raw material water supply route is supplied to either one of electrodes, anode or cathode, and then to the other electrode via the through-hole (Lines 22-32, Page 3, Patent Gazette of PTL 10). In PTL 10, a through-hole which communicates the anode compartment and the cathode compartment is provided, but no through-hole is provided in the members of the anode electrode, the cathode electrode and the ion exchange membrane, and therefore, raw material water does not flow through the same site in the anode electrode, in the cathode electrode, and in the ion exchange membrane. Consequently, the electrolysis efficiency is extremely low.
PTL 11 discloses an electrolytic ozone generation element by which moisture contained in air is electrolyzed to generate ozone. In this element, a through-hole of 5 mm in diameter which penetrates the anode, solid polymer electrolyte membrane, and cathode at the center is provided. (Lines 11-13, Right column, Page 4, Lines 7-14, Right column, Page 7, and Fig.10, Patent Gazette of PTL 11)
PTL 11, however, relates to the gas phase reaction which generates ozone from moisture contained in feed air, and the through-hole is provided to circulate air as raw material, not liquid, thus having a different purpose from a through-hole to allow liquid to pass through. In Fig.10 of PTL 11, such case as providing multiple holes in the anode is described, but through-holes corresponding to all of those in the anode are not provided in the solid polymer electrolyte membrane and the cathode, but only one through-hole 26 at the center; and if this element is used for liquid phase reaction, smooth flow of electrolyte cannot be maintained, not achieving efficient electrolysis.

EP 0 343 122 A1 discloses an electrolytic cell for treating fluids with gases that are evolved by electrolysis.

EP 1 111 095 A1 relates to an ozone generating electrolysis cell and a method for fabricating the same.

DE 100 25 167 A1 discloses an electrode for electrolytic generation of ozone and/or oxygen.

JP 2009-108395 A relates to an electrolytic cell for producing hydrogen peroxide which produces the hydrogen peroxide using only water and oxygen-containing gas as raw materials.

US 2007/0095655 A1 discloses an electrode assembly for the electrochemical treatment of liquids with a low conductivity.

EP 2 017 229 A1 discloses a water treatment device and a water treatment method which removes an oxidant from water to be treated.

EP 0 080 288 A1 relates to an electrode structure for use in an electrolytic cell, and electrolytic cell containing the electrode structure.

In addition to the ozone water production area. the present invention can be applied in the following areas.

1. wastewater or waste fluid treatment

1) Electrolysis of Ammonia compounds

As a decomposition means of ammonia compounds contained in domestic wastewater, stockbreeding waste fluid, fisheries wastewater and certain industrial wastewater, electrolysis is known to be effective. For instance, NPL 1 discloses the process in which supporting electrolyte such as sodium chloride and sodium sulfate is added to promote electrolysis efficiently. However, by the use of a membrane-electrode assembly with solid polymer electrolyte membrane interleaved between the anode and cathode by the present invention, treatment becomes possible without adding those electrolytes, as a third component. Other structural features of the membrane-electrode assembly by the present invention are effective also in designing practical cells in these applications.

2) Treatment of wastewater containing organic substances

Multiple applications have been filed relating to an electrolysis treatment system for wastewater containing organic substances, but all of them apply electrolytic cell structure different from that by the present invention. For instance, PTL 12 proposes stack cells. The cells proposed assume that liquid flows in parallel with the electrode surface and therefore, they are low in reaction uniformity and hydrodynamic efficiency. In addition, the cells proposed, not applying the solid polymer electrolyte membrane, show difficulty in treating wastewater of a low conductivity. The method disclosed in PTL 13 applies mesh electrodes and proposes the structure in which the treatment liquid passes between the anode and the cathode, but as the liquid eventually flows out from the side of the cell, the macro flow runs similarly parallel with the electrode. It also has the same drawback caused from not having solid polymer electrolyte membrane as in the case above-mentioned.

Also, PTL 14 proposes a removal method by electrolysis for treating raw water containing hardly decomposable substances, such as aromatic compounds, PCBs; and dioxin. This method applies nickel ferrite electrode, recommending electrolysis operation at a current density as high as possible to obtain high decomposition efficiency. By using the membrane-electrode assembly by the present invention and such anode with, for instance, conductive diamond, a high current density is realized. Also, as solid polymer electrolyte membrane is being used, operation at a high current density becomes possible even when treatment liquids of low conductivity are treated. PTL 15, also, proposes an electrolytic removal method of organic chlorine compounds like dioxin. By using the membrane-electrode assembly by the present invention applying solid polymer electrolyte membrane, addition of electrolyte aqueous solution is eliminated, which contributes to reducing the production costs and lowering the environmental load.

2. Drinking water production system for use at disasters or in developing countries

Needs for supplying drinking water from rivers are high at disasters or in developing countries. For these purposes, technologies to secure safety of drinking water have been developed, for which patent applications have been filed. PTL 16 relates to the process in which salt is added to the liquid to be treated and disinfection is performed by electrolytically formed sodium hypochlorite. This method, however, bears such problems as: 1)the process is complicated being combined with the hybrid photocatalytic disinfection, 2) sodium hypochlorite remains in water for a relatively long time, and 3) decomposition effect of extremely harmful organic chlorine compounds like dioxin is hard to expect. (Remarks: As with the case of tap water for which certain time duration between treatment and drinking can be secured, remaining of sodium hypochlorite is not problematic, but for on-site type units for general purposes at emergency, drinking immediately after treatment must be assumed.) The injection method of sodium hypochlorite compounds functioned as disinfectant, as described typically by PTL 17, bears similar problems to the above and an addition of extra fear of harmful materials formed through chlorination of dissolved organic substances. Ozone decomposes rapidly after forming and its concentration lowers to a safe level at drinking.

3. Electrolytic synthesis

Electrolytic synthesis is often applied as a production process of specific chemical substances. In this process, acids or salts are added as supporting electrolyte when raw material water is low in ionization and conductivity. For instance, PTL 18 proposes to apply neutral halide as supporting electrolyte when hydroxypivalic acid ester is electrolytically synthesized from hydroxypivalaldehyde and alcohol. By this addition, electrolysis efficiency is reported to improve, but supporting electrolyte could remain in the product. Moreover, the process becomes complicated, resulting in a higher cost. If cells applying the membrane-electrode assembly by the present invention are used, addition of supporting electrolyte can be eliminated since the solid electrolyte is provided in contact with the anode and the cathode. Other structural features of the membrane-electrode assembly by the present invention are also effective for electrolytic synthesis of organic substances.

**Citation List**

**Patent Literature**

PTL 1: Patent A 1999-269686
PTL 2: Patent A 2005-336607
PTL 3: Patent A 1997-157900
PTL 4: Patent A 1998-130876
PTL 5: Patent A 2004-060010
PTL 6: Patent A 2002-173789
PTL 7: Patent A 2005-177671
PTL 8: Patent A 2008-150665
PTL 9: Patent A 2004-285374
PTL 10: Patent A 2008-279341
PTL 11: Patent A 1999-131276
PTL 12: Patent A 2006-281013
PTL 13: Patent A 2002-531704
PTL 14: Patent A 2003-126860
PTL 15: Patent A 2004-305290
PTL 16: Patent A 2010-064045
PTL 17: Patent A 2009-262079
PTL 18: Patent A 1994-73584

**Non Patent Literature**

NPL 1: "Basic Study of Electrochemical Treatment of Ammonium Nitrogen-containing wastewater using Boron Doped Diamond Anode" SEI Technical Review, No. 65, October 2007, p. 71.

**Summary of Invention**

**Technical Problem**

The present invention aims to solve the problems of conventional methods and to provide a membrane-electrode assembly, an electrolytic cell using the same, a method and an apparatus for producing ozone water, a method for disinfection and a method for wastewater or waste fluid treatment, in which raw material water entered from the inlet port of the electrolytic cell reaches immediately the surfaces of both electrodes, where electrolytic reactions take place, without changing the flow direction; water containing ozone, is rapidly vented outside the electrolytic cell and thus ozone water can be produced at a high efficiency; a compact apparatus can be designed ,with minimizing pressure loss in the flow route, maintaining its production capacity; and high efficiency production is available at low cost.

**Solution to Problem**

The membrane-electrode assembly of the present invention comprises the solid polymer electrolyte membrane made of cation exchange polymer, and an anode and a cathode tightly adhered, respectively, to the both surfaces of the solid polymer electrolyte membrane. Over the entire surfaces of the anode, the solid polymer electrolyte membrane and the cathode, a plurality of through-holes with 0.1 mm or more in diameter passing through these three elements are provided to compose the membrane-electrode assembly. As anodic catalyst of the anode of the membrane-electrode assembly by the present invention, conductive diamond, lead dioxide, noble metals, and noble metal oxides are applicable.

In addition, the present invention provides the electrolytic cells equipped with current-carrying member to anode and cathode. The electrolytic cells by the present invention can be a stack structure with a plurarity of membrane-electrode assembly, which enables current-carrying member only to be equipped to the anode and cathode located at each end of the stack.

The present invention provides an ozone water production apparatusas defined in claim 1. Preferred embodiments of the apparatus are set forth in subclaims 2 to 5. In addition, the ozone water production apparatus by the present invention can be composed in such a manner that a means to supply raw material water in right angle direction or oblique direction to the surfaces of the anode, the solid polymer electrolyte membrane and the cathode, is provided at the anode composing the electrolytic cell; also a convection-inducing tube is provided at the cathode to discharge ozone water produced by the electrolytic cell in right angle direction or oblique direction to the surfaces of the anode, the solid polymer electrolyte membrane and the cathode ; and the electrolytic cell is put in the treatment liquor tank so as to be operated by natural convection associated with hydrogen, oxygen and ozone gases generated at the cathode and the anode.

Also, the electrolytic cell can be installed to the tap water faucet or the discharge port of non-purified water of the same kind, as the ozone water production apparatus by the present invention.

In addition, the present invention provides an ozone water production method using the electrolytic cell in which ozone water is produced by passing the raw material water from either the anode or the cathode in right angle direction or oblique direction to the surfaces of the anode, the solid polymer electrolyte membrane and the cathode. The ozone water production method by the present invention can produce ozone water using the electrolytic cells in which water containing a trace amount of alkali metal ions or alkaline earth metal ions is used as the raw material water, the raw material water is supplied from the anode side to the cathode side and is passed in right angle direction or oblique direction to the surfaces of the anode, to the solid polymer electrolyte membrane, and to the cathode so as to prevent hydroxide precipitate from depositing on the cathode and membrane.

Further, the present invention provides a disinfection method to disinfect treatment water using ozone water, which method comprises the ozone water production method. In addition, the disinfection method by the present invention can disinfect the treatment water using the electrolytic cells in which treatment water for disinfection is used as the raw material water, by passing the treatment water from either the anode or the cathode in right angle direction or oblique direction to the surfaces of the anode, the solid polymer electrolyte membrane and the cathode.

Furthermore, the present invention provides a wastewater or waste fluid treatment method applying ozone water, which method comprises the ozone water production method. In addition, the wastewater or waste fluid treatment by the present invention can treat the wastewater or waste fluid using the electrolytic cells in which wastewater or waste fluid is applied as the raw material water by passing the wastewater or waste fluid from either the anode or the cathode in right angle direction or oblique direction to the surfaces of the anode, to the solid polymer electrolyte membrane, and to the cathode.

In the present invention, ozone water is an electrolysis product containing ozone as a main element, obtained by electrolysis of pure water, tap water, etc., treatment water for disinfection, wastewater or waste fluid, etc. using the electrolytic cells by the present invention; wherein the ozone water can also be of ozone-contained water containing OH radicals, oxygen radicals, such as superoxide anion, hydrogen peroxide and other oxidants as wellin addition to ozone gas.

As an action of ozone water, ozone gas itself becomes a main player of oxidation in low pH (acid) environment, and in high pH (alkaline) environment, ozone gas decomposes and then formed OH radical dominates and oxidation action becomes further strong even if the total oxide equivalent is the same.

**Advantageous Effects of Invention**

According to the membrane-electrode assembly of the present invention and electrolytic cells applying the same, the membrane-electrode assembly is constructed by a plurality of through-holes with 0.1 mm or more in diameter provided in the entire surfaces of the anode, the solid polymer electrolyte membrane and the cathode; and therefore, compared with the conventional cells, voltage rising with time lapse is small, service life is extremely prolonged, maintenance costs are reduced, and power consumption can be curtailed because of low electrolysis voltage.

The ozone water production method and ozone water production apparatus by the present invention bring:

1) When raw material water is supplied from the anode side, ozone water produced on the anode side of the electrolytic cells passes through a plurarity of through-holes provided in the anode and the solid polymer electrolyte membrane and reaches the cathode side swiftly and a part of ozone is decomposed in such process leading to formation of OH radicals at the cathode and can display strong oxidation action. Meanwhile, when raw material water is supplied from the cathode side, ozone water produced at the anode side of the electrolytic cells are directly discharged outside the system without touching the cathode, and therefore, ozone water at a high concentration can be produced.

2) Raw material water entering from the holes of the anode or the cathode of the electrolytic cells by the present invention reaches immediately one electrode surface of the anode and the cathode, which is the electrolysis reaction site, without changing the flow direction; then, after the electrolysis reaction products or the decomposition products are obtained, the raw material water is discharged outside the electrolytic cells through the holes of the solid polymer electrolyte membrane and the other electrode surface of the anode and the cathode in a short period of time and, therefore, according to the present invention, ozone water can be produced at a high efficiency. Meanwhile, electrolysis reaction products or decomposition products obtained at the anode can also be produced at a high efficiency, if the raw material water is supplied from the anode side in the cell and such a cathode material is used that reduction of $H^+$ ions, which have electrophoresed in the solid polymer electrolyte membrane, that is, hydrogen formation reaction preferentially occurs on it and, as a result, decomposition of the ozone at the cathode is restrained.

3) If raw material water is supplied from the anode in the cell, ozone water passed through the anode immediately flows into the cathode side, and then discharged outside the electrolytic cells smoothly and swiftly. Thus, obtained catholyte contains as-formed active ozone gas, with electric potential kept relatively high.which, in case water containing a trace amount of alkali metal ions or alkaline earth metal ions is used, can minimize hydroxide precipitation. Hydroxide precipitation is regarded as problematic in the ozone water production method applying such water as raw material.

4) Since the ozone water production apparatus of the present invention can be disposed in an extremely small width in longitudinal direction at the middle or the end of existing fluid piping, the channel pressure drop can be minimized allowing a compact and small equipment design. Moreover, the unit comprising anode, cathode, and solid polymer electrolyte membrane (membrane-electrode assembly) can be stacked in multiple number of units, as required, to constitute electrolytic cells. The availability of easy expansion of equipment capacity with the stack structure also allows a further compact design without sacrificing production capacity. This feature facilitates a commercial design of small-sized unit of the ozone water production apparatus in such a case as retro-fit installation to a public tap water line.

5) The ozone water production apparatus by the present invention is also suitable as a throw-in type unit, which is an easy-detachable and portable electrolytic cell equipped in a water-filled vessel. Water can be circulated by a pump combined with the unit; or water circulation can be realized by natural convection induced from rising ozone gas and oxygen and hydrogen gases formed together with ozone gas by electrolysis when utilizing a structurally simplified, practically effective throw-in type unit of such a configuration that the electrolytic cell is equipped with open inlet and outlet ports and a convection-inducing tube is installed on the outlet side of the unit, through which the raw material water flows in parallel with the gravity direction.

6) In addition, the ozone water production method and the ozone water production apparatus by the present invention can widen the range of practical use in various applications by being combined with existing technologies. One example is as follows. As ozone decomposes easily in water, its concentration sharply decreases with lapse of time; in order to prolong the service life of ozone water, a production system of nano-bubble ozone water is proposed. (Patent A 2005-246293) This type of the production system is realized by incorporating, for example, an ultrasonic generator as part of the ozone water production apparatus by the present invention. In this case, if cathode or anode is utilized as the ultrasonic transmission plate, the function can be added without sacrificing the size benefit of the apparatus.

7) As a means to obtain ozone water stably, dissolving carbon dioxide gas in raw material water or produced ozone water is proposed. (Patent A 2003-117570, etc.) Such system can be easily developed, if the ozone water production method and the ozone water production apparatus by the present invention are combined. Moreover, according to the disinfection method by the present invention, ozone water is obtained at a high efficiency and the treatment water can be disinfected efficiently. In case the treatment water is applied to the electrolytic cell, the treatment water passes through the through-holes of the membrane-electrode assembly, the water, inevitably from its structure, contacts the highly acidic anode reaction surface and solid polymer electrolyte membrane where bacteria is greatly damaged, and OH radicals having a strong oxidation action are formed through contact of ozone water in anolyte with the cathode inevitably providing a strong bactericidal action. In addition, the electrolytic cell by the present invention, featuring high power efficiency and small-size design, is best suited to a compact and portable apparatus for drinking water disinfection which is used in developing countries or disaster sites. According to the wastewater or waste fluid treatment method by the present invention, the treatment water is treated efficiently and uniformly, in addition to ordinary oxidation action by ozone water, by OH radicals having a strong oxidation action formed through contact of ozone water in anolyte with the cathode. Also, the membrane-electrode assembly by the present invention can be easily configured to multiple stacks, achieving a highly efficient treatment system. The cell configuration of this invention allows the electrolyte and the treatment water to pass through the boundary surface of the electrodes, the reaction site, and the solid electrolyte virtually simultaneously and evenly under the same conditions resulting in an even higher treatment efficiency being achieved.

**Brief Description of Drawings**

[Fig.1] Fig.1 is an embodiment of the electrolytic cell used in the present invention.
[Fig.2-1] Fig.2-1 is a sectional view showing an embodiment of the ozone production system by the present invention.
[Fig.2-2] Fig.2-2 is a schematic view showing an embodiment of the ozone production system by the present invention.
[Fig.3] Fig.3 is a view showing another embodiment of the electrolysis-type ozone production system by the present invention.
[Fig.4] Fig.4 is a view showing yet another embodiment of the electrolysis-type ozone production system by the present invention.
[Fig.5] Fig.5 is a view showing yet another embodiment of the electrolysis-type ozone production system by the present invention.
[Fig.6] Fig.6 shows the electrolysis time vs. Electrolysis voltage in Example 22 and Comparative Example 3.
[Fig.7] Fig.7 shows the electrolysis time vs. Electrolysis voltage in Example 23 and Reference Example 1.
[Fig.8] Fig.8 shows the electrolytic cell used in Comparative Examples.
[Fig.9] Fig.9 is a sectional view of the ozone roduction system used in Comparative Examples.
[Fig.10] Fig.10 shows difference in depigmentation effect between Example 26 and Comparative Example 5.

**Description of Embodiments**

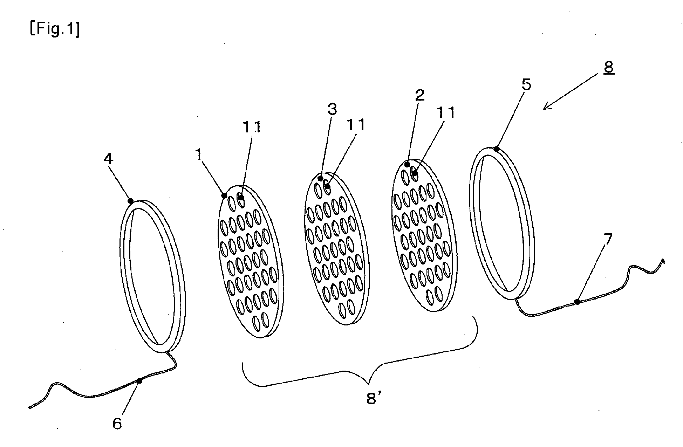

The following explains an embodiment of the present invention in reference to Fig.1.
Fig.1 shows an embodiment of the ozone water production method and the ozone water production apparatus used in the present invention.
In the electrolytic cell 8, the anode 1 comprising anodic catalyst for ozone generation deposited on a structure of specified shapes and properties is tightly adhered to one side of the solid polymer electrolyte membrane 3 comprising the cation exchange membrane, and in front of the anode 1, the current-carrying member 4 is provided. The cathode 2 comprising cathodic catalyst for hydrogen generation deposited on a structure of specified shapes and properties is tightly adhered to the other side of the solid polymer electrolyte membrane 3 comprising the cation exchange membrane, and in front of the cathode 2, the current-carrying member 5 is provided. Over the entire surfaces of anode 1, cathode 2, and solid polymer electrolyte membrane 3, multiple numbers of through-holes 11 with 0.1 mm or more in diameter, passing through these elements are provided. Power cord 6 and 7 are connected respectively to the current-carrying members 4 and 5. The more the number of through-holes 11, which must be at least two, increases, the more the exposed area of the anode/solid polymer electrolyte membrane interface, which is ozone generation region, increases. However, in order to maximize the effect of the present invention, the diameter of the through-holes 11 shall be 0.1 mm or more,
**[0047]** because too small the hole will increase the channel resistance of water while the number of holes should be as many as possible to secure smooth water flow. The diameter of the through-hole 11 is preferably in the range of 1-5 mm. The membrane-electrode assembly 8' is constructed in such a manner that the anode 1 comprising anodic catalyst for ozone generation deposited on a structure of specified shapes and properties is tightly adhered to one side of the solid polymer electrolyte membrane 3 comprising the cation exchange membrane, and the cathode 2 comprising cathodic catalyst for hydrogen generation deposited on a structure of specified shapes and properties is tightly adhered to the other side.
A plurality of through-holes 11 are required to be formed over the entire surfaces of anode 1, cathode 2, and solid polymer electrolyte membrane 3, and via the through-holes 11, so that the raw material water and the electrolysis products move from the anode side to the cathode side, or from the cathode side to the anode side. For a smooth movement of raw material water and electrolysis products from the anode side to the cathode side or from the cathode side to the anode side, the through-holes 11 of the anode 1, the cathode 2 and the solid polymer electrolyte membrane 3 are provided preferably at the same location, but unless the movement of the raw material water and the electrolysis products is interfered, the region is not required to be mutually the same. For instance, when the anode 1 and the cathode 2 are made of mesh, the solid polymer electrolyte membrane 3 is allowed to have through-holes to communicate with some opening parts of meshes as the anode 1 and the cathode 2.

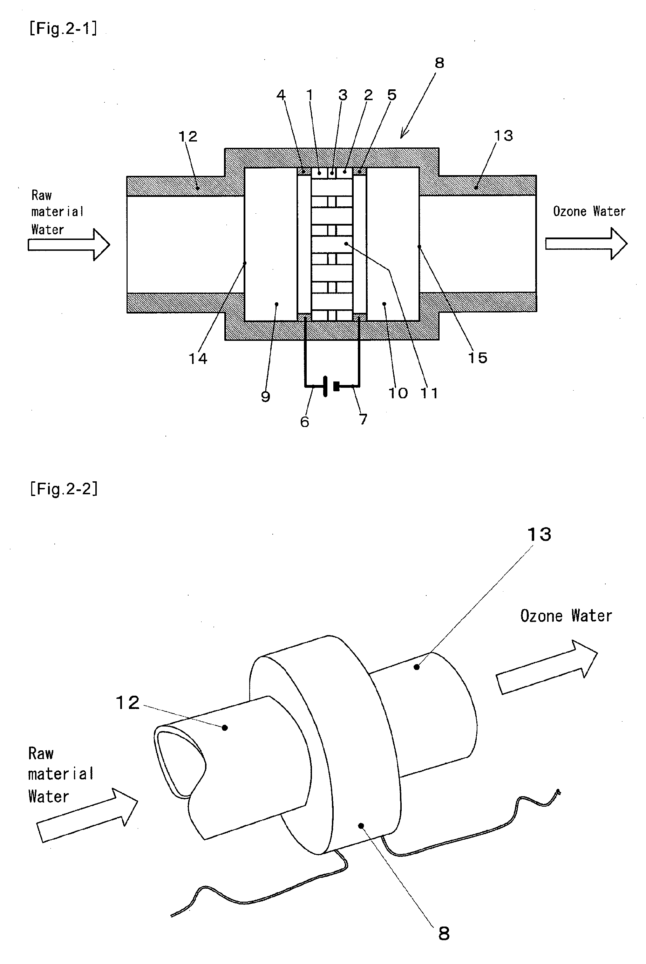

Fig.2-1 and Fig.2-2 show an embodiment of the ozone water production method and the ozone water production apparatus by the present invention. To the electrolytic cell 8, a DC power source commonly used for electrolysis operation are connected.

The anode compartment 9 is provided in front of the anode 1; the cathode compartment 10 is provided in front of the cathode 2; the pipe 12 supplies raw material water to the anode compartment 9 of the electrolytic cell 8; the pipe 13 discharges electrolytically produced ozone water from the cathode compartment 10 of the electrolytic cell 8; the inlet port 14 supplies raw material water to the anode compartment 9 of the electrolytic cell 8; and the outlet port 15 discharges ozone water from the cathode compartment 10 of the electrolytic cell 8.

In Fig.2-1 and Fig.2-2, a plurality of through-holes 11 with 0.1 mm or more in diameter are provided to pass through the anode 1, the solid polymer electrolyte membrane 3 and the cathode 2 constructing the electrolytic cell 8; the inlet port 14 for raw material water and the pipe 12 for raw material water supply are connected to the anode compartment 9 in right angle direction or oblique direction to the surfaces of the anode 1, the solid polymer electrolyte membrane 3 and the cathode 2; and the outlet port 15 for ozone water and the outlet pipe 13 for ozone water discharge are connected to the cathode compartment 10 to run in right angle direction or oblique direction.

For the electrolytic cell 8, the current-carrying members 4 and 5 can be directly connected to the pipe 12 for raw material water supply and the pipe 13 for ozone water discharge, without providing the anode compartment 9, the cathode compartment 10, the inlet port 14 for raw material water, and the outlet port 15 for ozone water.

The electrolytic cell 8 can be installed in oblique direction, not in right angle direction, to the flow of raw material water. When installed in oblique direction, electrolysis area widens, allowing further enhanced current efficiency and ozone production rate.

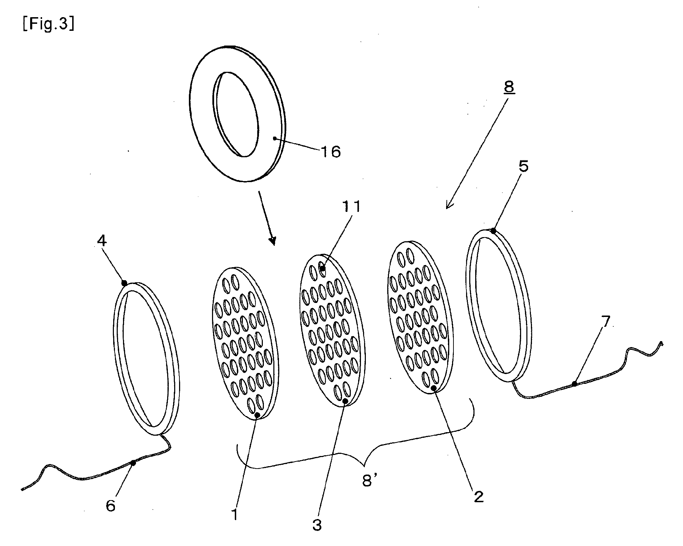

Fig.3 shows another embodiment of the present invention, assuming an electrolysis apparatus with a small production capacity. Periphery of electrolytic surface of the anode 1 in contact with the solid polymer electrolyte membrane 3 is covered by the area limiting ring 16 comprising fluoropolymer film having no ion exchange capacity, processed in doughnut shape, to limit the effective electrode surface of the anode 1 to the central part. With this structure, high electric current efficiency is obtained especially in the region where electric current is low and water volume is relatively large.

As raw material water, pure water, tap water or water containing a small amount of chlorine or sodium hypochlorite is applicable. It is recommendable that raw material water is introduced normally from the anode side and electrolytically produced ozone water is discharged from the cathode side. When pure water is applied as raw material water, it is also possible that pure water is introduced from the cathode side and electrolytically produced ozone water is discharged from the anode side.

For the electrolytic cell 8, it is possible to pile up a multiple number of the membrane-electrode assembly 8', configuring the electrolytic cell of a stack structure. If an element assembly of anode/solid polymer electrolyte membrane/cathode, as a unit, is double-decked to make up an electrolytic cell similarly as afore-mentioned, improved ozone concentration and electric current efficiency are obtained. By configuring the membrane-electrode assembly 8' to a double-decked, required electrolysis voltage will be a little more than twice, but ozone concentration of obtained ozone water can be raised by 57-67%. Because the membrane-electrode assembly 8' is thin in structure, assemblies in several stacks can configure an electrolytic cell of almost the same dimensions as a non-stacked cell.

When water containing a trace amount of alkali metal ions or alkaline earth metal ions, e.g., tap water, is applied as the raw material water, it is necessary that the inlet port 14 for raw material water and the pipe 12 for raw material water supply are connected to the anode compartment 9 in right angle direction or oblique direction to the surfaces of the anode 1, the solid polymer electrolyte membrane 3 and the cathode 2 so that raw material water flows from the anode side to the cathode, and that the outlet port 15 for electrolytically produced ozone water and the pipe 13 for ozone water discharge are connected to the cathode compartment 10 in right angle direction or oblique direction so as to pass raw material water from the anode side to the cathode side. With this configuration, deposition of hydroxide precipitate on the cathode 2 and the solid polymer electrolyte membrane 3 can be restrained.

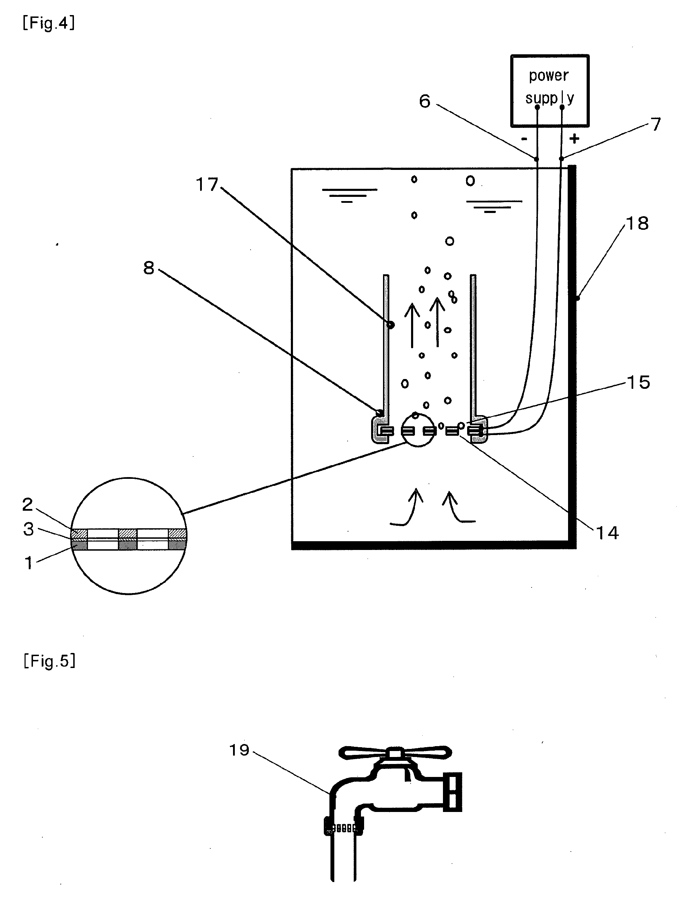

Fig.4 is yet another embodiment by the present invention. The power cords 6 and 7 are connected to the electrolytic cell 8; the convection-inducing tube 17 is provided to the outlet port 15 for electrolytically produced ozone water in right angle direction or oblique direction; and the electrolytic cell 8 is placed in the treatment tank 18. According to this apparatus, the electrolytic cell can be operated by natural convection associated with hydrogen, oxygen and ozone gases generated from the cathode 2 and anode 1, eliminating necessity for power mechanism like an electric pump. Moreover, if built-in batteries are provided in the electrolytic cell 8 instead of the power cords 6 and 7, portability of the apparatus is further enhanced.

Fig.5 is yet another embodiment by the present invention, relating to the electrolytic cell 8 installed at a tap water faucet 19 or at a vent of non-purified water of the same kind. Ozone water is produced by passing raw material water through the electrolytic cell 8 by the present invention from either one of the anode compartment 9 and the cathode compartment 10 in right angle direction or oblique direction to the surfaces of the anode 1, the solid polymer electrolyte membrane 3 and the cathode 2. Since the electrolytic cell 8 by the present invention can be installed with an extremely small width in longitudinal direction in the middle of a fluid piping, channel pressure drop is minimized and a compact system design is possible.

As anodic catalyst for the anode 1 used in the electrolytic cell 8, conductive diamond electrodes are recommended. The conductive diamond electrode offers superior application versatility; it generates ozone at a higher efficiency when compared with noble metal electrodes or noble metal compound electrodes and unlike lead dioxide electrode, it maintains its electrochemical activity after being left idle during cease of operation with no environmental load. Diamond, of which electric conductivity can be controlled by doping, is regarded as a promising electrode material. Diamond electrodes have an extremely wide potential window and a high activation overvoltage to oxygen formation reaction, and are reported to generate ozone from anodic reaction, in addition to oxygen (Patent A 1999-269686). If such metals or alloys thereof as tantalum, niobium, titanium, zirconium and silicon, which form a stable passive film in the treatment water are used as anode substrate, the anode is not required to be entirely covered with diamond catalyst. Even if some part of the substrate is exposed, it causes no significant impediment. A representative hot-filament CVD method is described as follows. Hydrocarbon gases such as methane $CH_4$ or organic substance such as alcohol are supplied as carbon sources together with hydrogen gas to the CVD chamber; the filament is heated, while reduction atmosphere is maintained, to 1800-2400 degrees Celsius, the temperature range at which carbon radicals form. An electrode substrate is disposed in the temperature range (750-950 degrees Celsius), at which diamond precipitates. The concentration of hydrocarbon gas to hydrogen is 0.1-10 vol.%, at a pressure of 20hPa-1013hPa (1 atmospheric pressure).

An addition of a trace amount of an element with a different valency is essential for diamond to obtain desired conductivity. Preferable content of boron B or phosphorus P is 1-100000 ppm, and more preferably, 100-10000 ppm. As the raw material compound, trimethylboron $(CH_3)_3B$ is applied, but less toxic boron trioxide $B_2O_3$, or diphosphorus pentoxide $P_2O_5$ is also applicable. As the electrode substrate of the present invention, such shapes as plate, particle, fiber, rod, and perforated plate can be used.

Since cathodic reaction of the cathode 2 used for the electrolytic cell 8 is dominantly hydrogen generation, electrode catalyst which is free from hydrogen embrittlement is preferably selected from such a group as platinum group metals, nickel, stainless steel, titanium, zirconium, molybdenum, tungsten, silicon, gold, silver, carbon, diamond and various metal carbides. As the cathode substrate of the cathode 2, applicable materials are limited to stainless steel, zirconium, carbon, nickel, titanium, molybdenum, tungsten, silicon and carbide thereof. Since the units by the present invention are disposed in contact with water containing oxidant like ozone, materials for electrode substrates should be among those superior in oxidation resistance. Electrode substrates made of stainless steel or nickel are also serviceable as electrode catalyst.

As the solid polymer electrolyte membrane 3 for the electrolytic cell 8, known materials of cation exchange membrane can be widely applied, and especially, perfluorosulfonic acid type cation exchange membrane having sulfonic acid group with superior chemical stability is best suited.

As anodic catalyst, an appropriate material is selected from among conductive diamond, amorphous carbon, graphite, lead dioxide, noble metals and noble metal compounds, in view of catalytic reaction, etc. By simply replacing electrodes, the membrane-electrode assembly by the present invention can be adjusted to various applications, such as for organic electrolytic synthesis, decomposition of organic chlorine compounds containing dioxin, waste fluid treatment, treatment of river water for drinking purpose in developing countries, and ozone water production.

In the disinfection method by the present invention, the following operation is also possible. Pure water, tap water, etc. is used as raw material water to produce ozone water by the electrolytic cell of the present invention and then, by using the produced ozone water, water to be treated is disinfected.

Further, as yet another disinfection method by the present invention, fluid containing bacteria to be treated is directly supplied, as electrolyte, to the electrolytic cell by the present invention for direct electrolysis, instead of pure water, tap water, etc. as raw material water. When passing through the through-holes of the membrane-electrode assembly, the fluid is made contact with the highly acidic anode reaction surface and the solid polymer electrolyte membrane and ozone water is simultaneously produced, with which disinfection is effected.

Moreover, in the wastewater or waste fluid treatment method by the present invention, ozone water is produced by the electrolytic cell of the present invention applying pure water, tap water, etc. as raw material water and then, wastewater or waste fluid is treated with the produced ozone water.

Further, as yet another wastewater or waste fluid treatment method by the present invention, wastewater or waste fluid to be treated is supplied, as electrolyte, to the electrolytic cell by the present invention for direct electrolysis, instead of pure water, tap water, etc. as raw material water, so that contained compounds are decomposed to those of low-molecular weight and treated with ozone water produced simultaneously.

## Examples

The following explains examples of the present invention, but the present invention shall not be limited to these examples.

Examples 1-8

The electrolytic cell 8 shown in Fig.1 and the ozone water production apparatus shown in Fig.2-1 and Fig.2-2 were built in the following manner.

An anode is prepared by applying boron doped diamond (BDD) coating at about 9.6g/m$^2$ weight per unit area on a niobium plate, Dia.25mm, 3mm thickness, as substrate, with 31 holes of Dia.3mm opened at the disposition shown in Fig.1; a cathode is prepared by a SUS304 plate processed in the same shape as the anode and polished on both surfaces with emery paper up to #1000; between the anode and the cathode, a solid polymer electrolyte membrane made from a commercially available perfluorosulfonic acid type cation exchange membrane (Trade Name: Nafion 350, Registered Trademark by Du Pont) cut to Dia.25mm with 31 holes of Dia.3mm opened as the electrodes was inserted, constituting a basic element assembly of the apparatus. The element assembly comprising this structure was incorporated in a plastic resin casing to constitute an electrolytic cell, to which electric current was supplied via pure titanium-made current-carrying members provided at the both ends of the anode and the cathode. Degree of adhesion between the both electrodes and solid polymer electrolyte membrane affects ozone formation properties of the electrolysis apparatus, and therefore, M30 screw threaded at one end of the electrolytic cell was firmly tightened at 5Nm torque to secure a certain degree of pressure. The electrolytic cell thus constructed features that the size is compact, the internal flow path of fluid to be electrolyzed is straight, minimizing pressure loss and the installation to the existing piping is easy.

As raw material water, pure water (DI water) maintained at 20 degrees Celsius was introduced to the electrolytic cell from the anode side at a constant flow rate. Constant current was supplied using a DC constant current device and voltage between electrodes (electolysis voltage) was monitored by a voltmeter. Table 1 shows the applied flow rates of raw material water and the current values. Ozone concentration of ozone water produced by electrolysis was measured by sulfuric acid acidity, iodine-thiosulphate titration method based on "Measuring Methods of Ozone Concentration (issued March 1994)"- provisional standards by Japan Ozone Association -for the samples taken in a constant volume from the outlet water of the electrolytic cell after operation conditions had stabilized in 5-odd minutes from the start of electrolysis. In an attempt to correctly evaluate the properties of the present electrolysis apparatus, electrolysis tests were conducted on multiple levels for the ranges: current value 1.67A-3.88A, flow rate 170ml/min.-320ml/min. Water feed direction was reversed and tests were also conducted for the feeding from the cathode side. Table 1 summarizes the results.

Ozone concentration in the produced ozone water is a parameter that governs the effect of disinfection or cleaning as ozone water, and depending on applications, the concentration is required to be contained within a certain range. If concentration in the produced ozone water exceeds the level required by application, it can be adjusted easily, for instance, by increasing the water flow rate. Generally, as equipment capability, a higher ozone concentration in the produced ozone water is considered preferable.

From the test results summarized in Table 1, the following were made clear.

1) Obtained ozone concentrations were from 2.9ppm to 6.2ppm.

2) From comparisons between Example 1 and Example 2 or between Examples 3,4,&5, it was known that obtained ozone concentration increased with increase of current value under the same flow rate.

3) From comparisons between Example 1 and Example 3 or between Example 2 and Example 5, it was known that obtained ozone concentration decreased with increase of flow rate.

4) Regarding feed direction of water, it was known that feeding from the anode side in Example 1 gave a little higher ozone concentration compared with Example 7 in which feeding was made from the cathode side, while other conditions were identical.

5) As afore-mentioned, ozone formation reaction is a competing reaction against oxygen formation, and therefore, the respective electric current efficiency, which reflects the formation ratio of ozone and oxygen, will be a parameter in comparing performance of the electrolysis apparatus. Under the electrolysis conditions applied to Examples 1-8, electric current efficiency of ozone formation ranged from 5.4% to 8.8%. When the current efficiencies are compared among examples under the comparable conditions similar to the ozone concentration analysis as above described, d the measured electric current efficiency decreased with increase in electric current and increased clearly with increase in flow rate.

Table 1: Pure Water Electrolysis-Standard Cell (Single stack) Tests

| | Example 1 | Examle 2 | Examle 3 | Examle 4 | Examle 5 | Examle 6 | Examle 7 | Examle 8 |
|---|---|---|---|---|---|---|---|---|
| anode | BDD | BDD | BDD | BDD | BDD | BDD | BDD | BDD |

(continued)

| | Example 1 | Examle 2 | Examle 3 | Examle 4 | Examle 5 | Examle 6 | Examle 7 | Examle 8 |
|---|---|---|---|---|---|---|---|---|
| cathode | SUS304 | SUS304 | SUS304 | SUS304 | SUS304 | SUS304 | SUS304 | SUS304 |
| solid polymer electrolyte membrane | Nafion * 350 | Nafion * 350 | Nafion * 350 | Nafion * 350 | Nafion * 350 | Nafion * 350 | Nafion * 350 | Nafion * 350 |
| active area of electrode ($cm^2$) | 4.91 | 4.91 | 4.91 | 4.91 | 4.91 | 4.91 | 4.91 | 4.91 |
| number of stack | 1 | 1 | 1 | 1 | 1 | 1 | 1 | 1 |
| raw material water | pure water | pure water | pure water | pure water | pure water | pure water | pure water | pure water |
| flow rate (ml/min) | 170 | 170 | 230 | 230 | 230 | 320 | 170 | 320 |
| a direction of water current | anode → cathode | anode → cathode | anode → cathode | anode → cathode | anode → cathode | anode → cathode | cathode → anode | cathode → anode |
| electric current (A) | 1.67 | 3.88 | 1.67 | 2.87 | 3.88 | 3.34 | 1.67 | 3.34 |
| current density ($A/cm^2$) | 0.34 | 0.79 | 0.34 | 0.58 | 0.79 | 0.68 | 0.34 | 0.68 |
| ozone concentration (ppm) | 3.7 | 6.2 | 2.9 | 5.4 | 5.9 | 4.1 | 3.4 | 3.2 |
| current efficiency (%) | 7.5 | 5.4 | 7.9 | 8.8 | 7.0 | 7.8 | 6.9 | 6.1 |
| Nafion *: Registered Trademark by Du Pont | | | | | | | | |

Examples 9-16

Using the same electrodes, the solid polymer electrolyte membrane, and the electrolytic cell as those used in Examples 1-8, the following modifications were made to the anode, assuming a small capacity electrolysis apparatus: the periphery of electrolytic surface of the anode in contact with the solid polymer electrolyte membrane was covered, as shown in Fig.3, with the area limiting ring 16 in doughnut shape comprising fluoropolymer film without ion exchange capacity, limiting the effective electrode surface to internal Dia.13mm, $1.33cm^2$ from the original, Dia.25mm, $4.91cm^2$ in Examples 1-8.
Table 2 shows the test results of pure water electrolysis. In Table 2, the flow rate of material water and current values are stated, and other conditions not given in Table 2 were the same as those applied in Example 1-8. In Examples 9-16, ozone concentration varied in the range of 1.4ppm to 8.5ppm, and electric current efficiency varied in the range of 5.4% to 14.4%. Under the conditions in Examples 9, 10, 12, 13, where electric current was low and flow volume is relatively small, high current efficiencies in excess of 10% were obtained. However, in the region that current density is large as $0.38A/cm^2$ and flow rate was relatively large as 170ml/min. (as shown in Example 16), current efficiency stays at 5.4%, proving a limitation in capacity of the electrolytic cell from restricting the electrode area.

Table 2: Pure Water Electrolysis-Area-limited Cell Tests

| | Examle 9 | Examle 10 | Examle 11 | Examle 12 | Examle 13 | Examle 14 | Examle 15 | Examle 16 |
|---|---|---|---|---|---|---|---|---|
| anode | BDD | BDD | BDD | BDD | BDD | BDD | BDD | BDD |

(continued)

| | Examle 9 | Examle 10 | Examle 11 | Examle 12 | Examle 13 | Examle 14 | Examle 15 | Examle 16 |
|---|---|---|---|---|---|---|---|---|
| cathode | SUS304 | SUS304 | SUS304 | SUS304 | SUS304 | SUS304 | SUS304 | SUS304 |
| solid polymer electrolyte membrane | Nafion * 350 | Nafion * 350 | Nafion * 350 | Nafion * 350 | Nafion * 350 | Nafion * 350 | Nafion * 350 | Nafion * 350 |
| active area of electrode (cm$^2$) | 1.33 | 1.33 | 1.33 | 1.33 | 1.33 | 1.33 | 1.33 | 1.33 |
| number of stack | 1 | 1 | 1 | 1 | 1 | 1 | 1 | 1 |
| raw material water | pure water | pure water | pure water | pure water | pure water | pure water | pure water | pure water |
| flow rate (ml/min) | 50 | 50 | 50 | 100 | 100 | 100 | 170 | 170 |
| a direction of water current | anode→ cathode | anode→ cathode | anode→ cathode | anode→ cathode | anode→ cathode | anode→ cathode | anode→ cathode | anode→ cathode |
| electric current (A) | 0.20 | 0.50 | 1.00 | 0.30 | 0.50 | 1.00 | 0.20 | 0.50 |
| current density (A/cm$^2$) | 0.15 | 0.38 | 0.75 | 0.23 | 0.38 | 0.75 | 0.15 | 0.38 |
| ozone concentration (ppm) | 2.7 | 5.8 | 8.5 | 2.1 | 3.2 | 4.6 | 1.4 | 2.4 |
| current efficiency (%) | 13.4 | 11.6 | 8.5 | 14.4 | 12.7 | 9.2 | 7.5 | 5.4 |
| Nafion *: Registered Trademark by Du Pont | | | | | | | | |

Examples 17-20

Ozone production tests were conducted using the electrolytic cell in which the membrane-electrode assembly 8', comprising, as a unit, anode/solid polymer electrolyte membrane/cathode was incorporated, as Example 1, in double-decked. Measurements of ozone concentration were given in Table 3. With the increase of current value, ozone concentration increased, as in the cases of Examples 1-8; in addition, the cells with one membrane-electrode assembly 8' and the cells with a two membrane-electrode assembly stack were compared between Example 1 and Example 17, or between Example 6 and Example 19, in which the same electric current values and the water flow rates were applied respectively while the number of the membrane-electrode assemblies in the cell is one for Example 1 and Example 6 and two for Example 17 and Example 19, respectively. The ozone concentrations were higher with the two membrane-electrode assembly stack by 49-57%. Meanwhile, since the membrane-electrode assembly 8' is thin in structure, a cell with almost the same shape as that for one assembly unit cell can be used for the multiple stacking.

Table 3: Pure Water Electrolysis-Two-stack Cell Tests

| | Examle 17 | Examle 18 | Examle 19 | Examle 20 |
|---|---|---|---|---|
| anode | BDD | BDD | BDD | BDD |
| cathode | SUS304 | SUS304 | SUS304 | SUS304 |
| solid polymer electrolyte membrane | Nafion *350 | Nafion *350 | Nation *350 | Nafion *350 |
| active area of electrode (cm$^2$) | 4.91 | 4.91 | 4.91 | 4.91 |
| number of stack | 2 | 2 | 2 | 2 |

(continued)

| | Examle 17 | Examle 18 | Examle 19 | Examle 20 |
|---|---|---|---|---|
| raw material water | pure water | pure water | pure water | pure water |
| flow rate (ml/min) | 170 | 320 | 320 | 320 |
| a direction of water current | anode→ cathode | anode→ cathode | anode→ cathode | anode→ cathode |
| electric current (A) | 1.67 | 2.87 | 3.34 | 3.88 |
| current density (A/cm$^2$) | 0.34 | 0.58 | 0.68 | 0.79 |
| ozone concentration (ppm) | 5.8 | 5.0 | 6.1 | 6.7 |
| current efficiency (%) | 11.8 | 11.2 | 11.7 | 11.1 |
| Nation *: Registered Trademark by Du Pont | | | | |

Example 21

In Example 21, the electrolytic cell used a carbon cathode which was prepared in such manner that between the SUS304 cathode as described in Examples 1-8 and the solid polymer electrolyte membrane, long fiber carbon, Dia.5 micrometer, of about 20mg, was randomly inserted. Other constituent elements and test conditions were identical to those in Example 1. The results are summarized in Table 4. Compared with Example 1, in which the test conditions were the same except the cathode material, the obtained ozone concentration of 2.9ppm by Example 21 was a little lower than 3.7ppm by Example 1. This may be attributable to a higher electrocatalysis for ozone reduction by carbon used as the cathode compared with stainless steel.

In view of this, it is preferable that materials with low ozone decomposition activity should be used as cathode for the ozone water production process by the present method. But, when disinfection or wastewater treatment is performed in the electrolysis cell to which treatment water is directly charged, materials with high ozone decomposition activity are advantageous as cathode catalyst, because strong oxidation activity of OH radicals formed in the process of ozone decomposition at the cathode will promote decomposition reactions of the materials to be treated.

Table 4: Pure Water Electrolysis-Modified Cathode Tests

| | Example 21 |
|---|---|
| Anode | BDD |
| cathode | SUS304+CF |
| solid polymer electrolyte membrane | Nafion *350 |
| active area of electrode (cm$^2$) | 4.91 |
| number of stack | 1 |
| raw material water | pure water |
| flow rate (ml/min) | 170 |
| a direction of water Current | anode→cathode |
| electric current (A) | 1.67 |
| current density (A/cm$^2$) | 0.34 |
| ozone concentration (ppm) | 2.9 |
| current efficiency (%) | 5.9 |
| Nafion *: Registered Trademark by Du Pont | |

Comparative Examples 1 & 2

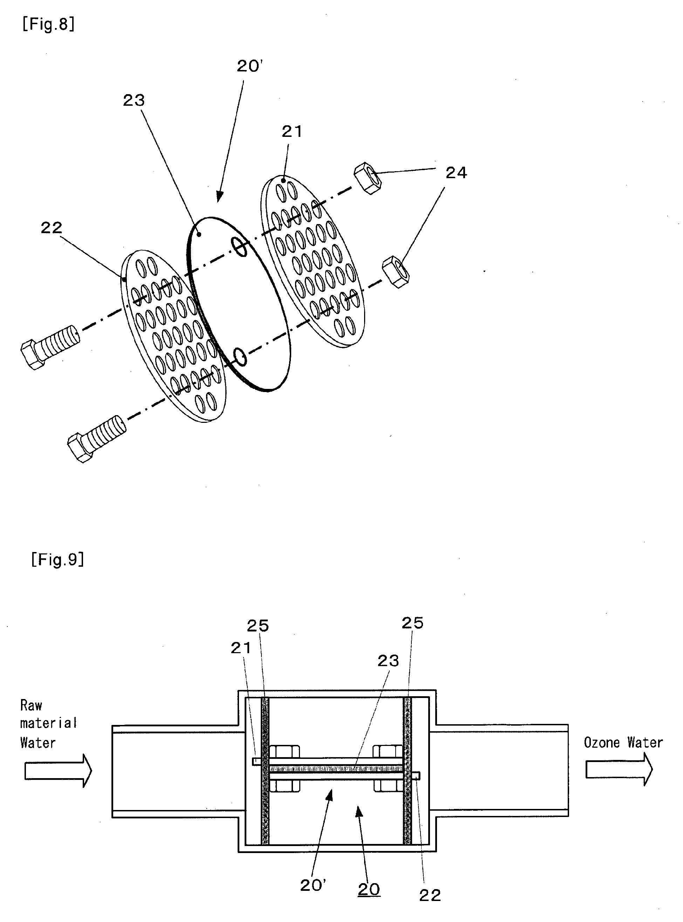

As Comparative Examples 1 & 2, the membrane-electrode assembly 20' shown in Fig.8 and the ozone water production apparatus shown in Fig.9 were built in the following manner. Between the anode 21 and the cathode 22 provided with through-holes as those of Examples 1-8, the solid polymer electrolyte membrane 23 comprising a commercially available perfluorosulfonic acid type cation exchange membrane (Trade Name: Nafion 350, Trademark Registered by Du Pont) with no through-holes made, was inserted and these three members were fixed with plastic resin-made M2 screw 24 to construct the membrane-electrode assembly 20', to which the current-carrying members 25 are connected to configure the electrolytic cell 20. Inside of the electrolytic cell 20, the ozone water production apparatus was disposed so that the raw material water flows in parallel with the electrode surface. Using this conventional ozone water production apparatus an ozone formation test with pure water as raw material as with the Examples was conducted. The results are tabulated in Table 5.

Table 5: Pure Water Electrolysis-Comparative Examples

|  | Cmprative Example 1 | Cmprative Example 2 |
|---|---|---|
| Anode | BDD | BDD |
| cathode | SUS304 | SUS304 |
| solid polymer electrolyte membrane | Nafion *350 | Nafion *350 |
| active area of electrode (cm$^2$) | 4.36 | 4.36 |
| number of stack | 1 | 1 |
| raw material water | pure water | pure water |
| flow rate (ml/min) | 170 | 320 |
| a direction of water current | parallel with anode and cathode | parallel with anode and cathode |
| electric current (A) | 1.67 | 3.34 |
| current density (A/cm$^2$) | 0.38 | 0.77 |
| ozone concentration (ppm) | 3.2 | 2.8 |
| current efficiency (%) | 6.6 | 5.5 |
| Nafion *: Registered Trademark by Du Pont | | |

Example 6 was compared with Comparative Example 1 having the same conditions except the disposition of the electrolytic cell. The ozone concentration was 4.1 ppm vs. 3.2ppm and the current efficiency was 7.8% vs. 6.6% respectively with Example 6 being clearly outperforming Comparative Example 1 in both measurements.

Power efficiency was discussed as a common issue for Examples 1-8 and Examples 17-20, as follows.

Generally, electrolytic performance of an ozone water production apparatus is evaluated from ozone concentration in the produced ozone water or current efficiency, but if viewed from alleviation of environmental load or a or designing battery driven, portable equipment, comparative evaluation based on consumed power efficiency, rather than electric current efficiency, may be more meaningful. For this purpose, several examples (Examples 1, 8, 17, 19) were chosen from Examples 1-8 and Examples 17-20, in which applied conditions were same and comparable, and those measurements are summarized in Table 6, together with Comparative Examples 1 and 2. Power efficiency of ozone formation is calculated by multiplying actual electric current efficiency by the ratio of actually measured electrolysis voltage vs. theoretical electrolysis voltage for ozone formation. When Example 1 using the apparatus by the present invention was compared with Comparative Example 1 using a conventional apparatus, the power efficiency was 1.06% and 0.66%, respectively, proving that the electrolysis efficiency of the apparatus by the present invention is outstandingly high. However, the power efficiency of Example 17 of two-stack cell, 0.73%, was lower than Example 1 of single-stack cell, 1.06%. This is due to the fact that Example 17 required electrolysis voltage twice or more. Similarly, in Example 8 and Example 19, where water flow rate and current value are both high, the power efficiency was 0.70% and 0.64%, respectively, which are clearly higher than that of Comparative Example 2, 0.48%. Example 19 of two-stack cell which showed a high ozone concentration, 6.1 ppm, was a little inferior to single-stack cell in power efficiency similarly to Example 17.

Table 6: Comparisons in Power Efficiency (Pure water electrolysis)

| | Example 1 | Example 17 | Cmprative Example 1 | Examle 8 | Examle 19 | Cmprative Example 2 |
|---|---|---|---|---|---|---|
| Anode | BDD | BDD | BDD | BDD | BDD | BDD |
| cathode | SUS304 | SUS304 | SUS304 | SUS304 | SUS304 | SUS304 |
| solid polymer electrolyte membrane | Nafion * 350 | Nafion * 350 | Nafion * 350 | Nafion *350 | Nafion * 350 | Nafion * 350 |
| active area of electrode (cm$^2$) | 4.91 | 4.91 | 4.36 | 4.91 | 4.91 | 4.36 |
| number of stack | 1 | 2 | 1 | 1 | 2 | 1 |
| raw material water | pure water | pure water | pure water | pure water | pure water | pure water |
| flow rate (ml/min) | 170 | 170 | 170 | 320 | 320 | 320 |
| a direction of water current | anode→cathode | anode→cathode | parallel with anode and cathode | cathode→anode | anode→cathode | parallel with anode and cathode |
| electric current (A) | 1.67 | 1.67 | 1.67 | 3.34 | 3.34 | 3.34 |
| electolysis voltage (V) | 10.7 | 24.3 | 15.2 | 13.1 | 27.5 | 17.3 |
| ozone concentration (ppm) | 3.7 | 5.8 | 3.2 | 3.2 | 6.1 | 2.8 |
| current efficiency (%) | 7.5 | 11.8 | 6.6 | 6.1 | 11.7 | 5.5 |
| Power efficiency (%) | 1.06 | 0.73 | 0.66 | 0.70 | 0.64 | 0.48 |

Nafion *: Registered Trademark by Du Pont
Power efficiency = current efficiency x theoretical electrolysis voltage (1.511V)/actually measured electrolysis voltage

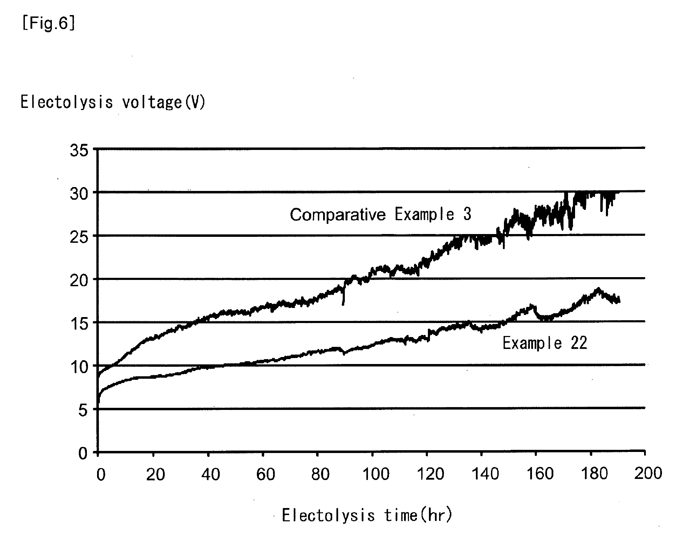

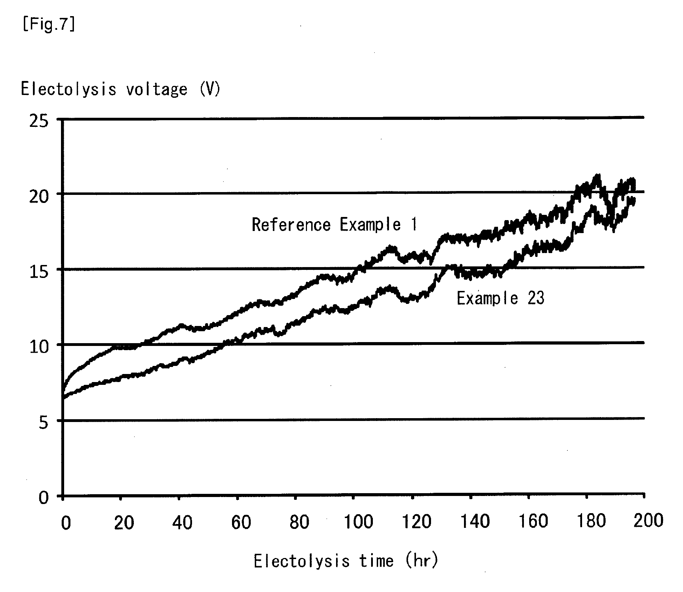

Tap water is applied as raw material water, instead of pure water, in Examples 22-24, Reference Examples 1 & 2, and Comparative Examples 3 & 4. The test results are shown in Table 7, Fig.6 and Fig.7. The ozone concentration in electrolysis was measured by the method described in the explanation of Examples 1-8. However, in the present examples, the total oxide equivalent of oxidizing substances including ozone is obtained by the iodometric titration method described in Examples 1-8, since oxidizing substances, other than ozone, such as hypochlorite formed from a trace amount of chlorine ion contained in raw material water, may be generated.

Table 7: Tap Water Electrolysis Results

| | Example 22 | Cmprative Example 3 | Example 23 | Reference Example 1 | Example 24 | Reference Example 2 | Cmprative Example 4 |
|---|---|---|---|---|---|---|---|
| Anode | BDD | BDD | BDD | BDD | BDD | BDD | BDD |
| cathode | SUS304 | SUS304 | SUS304 | SUS304 | SUS304 | SUS304 | SUS304 |
| solid polymer electrolyte membrane | Nafion * 350 | Nafion * 350 | Nafion * 350 | Nafion * 350 | Nation * 350 | Nafion * 350 | No |
| active area of electrode (cm$^2$) | 4.91 | 4.36 | 4.91 | 4.91 | 4.91 | 4.91 | 4.91 |
| raw material water | Tap water | Tap water | Tap water | Tap water | Tap water | Tap water | Tap water |
| flow rate (ml/min) | 170 | 170 | 170 | 170 | 170 | 170 | 170 |
| a direction of water current | anode→cathode | parallel with anode and cathode | anode→cathode | cathode→anode | anode→cathode | cathode→anode | anode→cathode |
| electric current (A) | 0.5 | 0.5 | 0.5 | 0.5 | 2.0 | 2.0 | 0.1 |
| electrolysis time (hr) | 200 | 200 | 200 | 200 | 5 | 5 | 330 |
| State of Hydroxide Precipitation | C | D | C | C' | A | B | C' |
| total oxide equivalent of oxidizing substances (ozone conversion)ppm | - | - | - | - | 6.6 | 6.3 | - |
| Remarks | Simultaneously done with Comparison Example 3 | Simultaneously done with Example 22 | Simultaneously done with Reference Example 1 | Simultaneously done with Example 23 | Simultaneously done with Reference Example 2 (Progress under observation) | Simultaneously done with Example 8 (Progress under observation) | No solid polymer electrolyte membrane |

Nafion *: Registered Trademark by Du Pont < State of Hydroxide Precipitation > A: Thinly precipitated in some areas of the cathode hole inner surface and on the cathode surface B: Slightly but apparently precipitated in the cathode water-inducing holes and the cathode entire surface C: A certain amount of precipitate observed on the cathode entire surface but no clog in the cathode water-inducing holes C': Thickly precipitated on the cathode entire surface, but no apparent clog of water-inducing holes D: Thickly precipitated on the cathode entire surface. Partly, clog of the water-inducing holes observed

Examples 22

Using the electrolytic cells of Example 1-8 and public tap water as raw material, electrolysis tests were conducted for consecutive 200 hours for studying the degree of precipitation, as hydroxide, of alkaline earth metal ion, mainly Ca, contained minutely in tap water. Applied flow rate of raw material water was at 170ml /min. and the electrolysis current was at 0.5A. Since metal ion content in public tap water is not always constant in general and in order to avoid the influence of such variation, the test of Example 22 was conducted in parallel and simultaneously with Comparative Example 3 using a conventional cell structure so that validity of the observed effect is ascertained. The results were given in Fig.6.

Examples 23

In Example 23, using the electrolytic cells of Example 1-8 and public tap water as raw material, continuous electrolysis tests were conducted at the same conditions as Example 22. Example 23 was conducted simultaneously with Reference Example 1 which was performed by the electrolytic cell of the same structure, but with reversed water flow. The results are given in Fig.7. Meanwhile, applied tap water was different between Example 22 and Example 23 and therefore, the content of alkaline earth metal ions, such as Ca, contained in a trace of amount in the tap water was also different. As a result, although there were negligible differences, the measured electrolysis voltages with the two examples showed almost the same electrolysis voltage, as shown in Fig.6 and Fig.7.

Examples 24

Using the electrolytic cells of Example 1-8 and public tap water as raw material as with Example 23, continuous electrolysis tests were conducted. In this example, the applied electrolysis current was 2.0A; the electrolysis time duration was 5 hours; and , two different water flow directions were tried: one from the anode side to the cathode side, and the other in opposite direction, in order to evaluate the effect of flow direction by observing the state of deposit at an early stage of electrolysis at a high electric current. Other conditions are the same as

Example 23.

Comparative Examples 3

Using the ozone producing apparatus shown in Fig.9 as with Comparative Examples 1 and 2, continuous electrolysis tests were conducted, supplying public tap water, as raw material, at a flow rate 170ml/min. and at an electrolysis current set to 0.5A. For Comparative Example 3, raw material water identical to Example 22 was used and experimented simultaneously. During the electrolysis, the voltage between anode and cathode was monitored as electrolysis voltage and automatically recorded at an interval of 5 minutes.

Fig.6 shows voltage data, monitored as electrolysis voltage, between anode and cathode of Example 22 and Comparative Example 3, and automatically recorded at every 5 minutes. Compared with Comparative Example 3, Example 22 showed lower electrolysis voltages with its elevation rate being significantly lower.

Generally, in commercial electrolysis operation, an apparatus is cleaned with acid, etc., as maintenance work, when electrolysis voltage has reached a certain pre-set level, to recover the function by removing deposit. In Fig.6, assuming the pre-set threshold voltage is 15V, the time to reach that level was about four times longer by Example 22 than by Comparative Example 3. Namely, according to Example 22, duration of no-maintenance downtime can be prolonged around 4 times, before deposit removing maintenance by acid cleaning, etc. is required. In Example 22, together with Comparative Example, the electrolysis test was terminated when electrolysis voltage of Comparative Example exceeded 30V, which is supply voltage limit, around 200 hours from the operation start. Successively, electrolytic cells of Example 22 and Comparative Example 3 were disassembled and the state of hydroxide precipitate in the electrolytic cells was examined. In Example 22, precipitation was extremely light compared with Comparative Example 3. As a result, it has been proven that the electrolysis method by the present invention can significantly reduce maintenance work for the ozone water production apparatus when applying raw material water containing impurity.

Reference Example 1

Using the electrolytic cell of Example 1-8, public tap water was supplied from the cathode side to the anode side at a flow rate of 170ml/min. and the 200-hour continuous electrolysis tests were performed at electrolysis current, 0.5A, together with Example 23. During the tests, electrolysis voltage was monitored and automatically recorded in every 5 minutes. After the tests, the degree of precipitation, as hydroxide, of alkaline earth metal ion, mainly Ca, contained in a trace amount in tap water was inspected. Reference Example 1 was the electrolysis test by the same electrolytic cell with the identical construction, but with reversed flow direction, to Example 23. During the electrolysis of Reference Example 1 and Example 23, voltage between anode and cathode was monitored as electrolysis voltage and automatically recorded at an interval of 5 minutes. Fig.7 shows the voltage changes with time. The electrolysis voltage gradually increased with increase of precipitation of hydroxide. The voltage by Reference Example 1 elevated at a higher rate than that by Example 23. Assuming that the voltage limit to recovery maintenance by acid cleaning, etc. is 15V, the time to reach that level was about 1.5 times longer by Example 23 than by Reference Example 1. Namely, even in the case of using such electrolytic cells as described in Example 1-8, in which restraining effect on hydroxide precipitation was outstanding, arranging water frow from the anode side to the cathode side can further enhance that effect. In Example 23, the test was ceased, together with Reference Example 1, when electrolysis voltage reached around 20V, around 200 hours from the operation start. Successively, electrolytic cells were disassembled and the state of hydroxide precipitation in the electrolytic cells were examined and compared with Reference Example 1. The results were given in Table 7. From the graph, it was verified that precipitation in Example 23 was clearly less compared with Reference Example 1. From these comparisons, it has been proven that the electrolysis method by the present invention can reduce maintenance work for the ozone water production apparatus that applies raw material water containing impurity.

Reference Example 2

Using the electrolytic cell of Example 1-8 and public tap water as raw material, Reference Example 2 performed a 5-hour continuous electrolysis test, simultaneously with Example 24 at an applied flow rate of 170ml/min. and electrolysis current at 2.0A. Raw material water of Reference Example 2 was charged from the cathode side and discharged from the anode side, being an opposite configuration of water flow to Example 24 in which raw material water was introduced from the anode side and drained from the cathode side. Tests were conducted to examine and compare the state of deposit at an early stage in electrolysis at a large electric current.

Other conditions are the same as Example 24. In order to eliminate the influence from the change of metal ion concentration in raw material water, the test of Reference Example 2 was conducted simultaneously with Example 24. After the tests, the electrolytic cells were disassembled and the degree of hydroxide precipitate was examined. As a result, it was verified that precipitate of hydroxide formed when the raw material water was charged from the anode side to the cathode side was clearly less compared with that from the opposite flow direction. Table 7 shows the results. The ozone concentration in electrolysis was measured by the method described in the explanation of Examples 1-8. However, in Example 24 and Reference Example 2, in addition to ozone, a total oxide equivalent of oxidizing substances including ozone is obtained by the iodometric titration described in Examples 1-8, since oxidizing substances, other than ozone, such as hypochlorite formed from a trace amount of chlorine ion contained in raw material water, generate.Table 7 shows the value of measured total oxide equivalent of oxidizing substances converted for ozone. As a result of measurement, Example 24 gave 6.6ppm as ozone-converted concentration, which is a little superior to 6.3ppm from Reference Example 2.

Comparative Example 4

Public tap water is slightly conductive, since it contains a trace amount of alkali metal ions, alkaline earth metal ions, chlorine ions, carbonic acid ions, etc. In this connection, it was attempted to verify whether a similar effect to the present invention was obtained, without solid polymer electrolyte membrane provided between the anode and cathode, by installing, in a short distance as possible, the anode and the cathode provided with through-holes as described in Example 1-8. In Comparative Example 4, a polyethylene mesh: Dia.25mm, 0.75mm thick, Lw6.6mm, Sw4.4mm was disposed instead of the solid polymer electrolyte membrane with through-holes as described in Examples 1-8, as separator between the anode and the cathode for the tap water electrolysis test. Raw material tap water flows from the anode side to the cathode side via the through-holes provided in the both electrodes as with Example 24. In Comparative Example 4, where solid polymer electrolyte membrane is not applied, supplying electric current to the same degree as Example 22 was not possible, since the electrolysis voltage would reach 30V, which is the maximum voltage available from the power source used for the experiment. Therefore, the electrolysis current was 0.1A, at which initial electrolysis voltage becomes similar to Example 22.

As with other cases of tap water electrolysis in the present specifications, electrolysis voltage increased with time, reaching 20V around 140 hours. Electrolysis continued till the point at which it reached 30V, the upper limit of power source voltage, to a lapse of 330 hours. After the tests, electrolysis cells were disassembled for examination, from which it was verified that hydroxide precipitated by a similar degree to Reference Example 1, in spite that the applied electric current was one fifth. From this Example, it is apparent that ozone water production without using solid polymer electrolyte membrane is inefficient.

Example 25

The following disinfection test was conducted with ozone water obtained from Example 3 and Example 17, which was sprayed using a commercially available spray.

[Disinfection Test]

Colon bacillus (E.coli IFO3972) or bacillus cereus (Bacillus cereus IFO13494) was treated by standard methods for use of subject. A loopful of pre-cultured colon bacillus was inoculated in a SCD culture medium (manufactured by Nihon Pharmaceutical Co., Ltd.), followed by shaking culture for 24 hours at 37 degrees Celsius, and centrifugally separated to prepare to $10^7$ cells/ml for test use. A loopful of bacillus cereus pre-cultured in SCD agar medium (manufactured by Nihon Pharmaceutical Co., Ltd.) was suspended in 1 ml of sterile water, followed by thermal treatment for 30 minutes at 65 degrees Celsius and then centrifugal cleaning by separation twice. This bacterial spore solution for testing was prepared to $10^7$ cells/ml.

Respective bacterial sample of 0.1 ml taken from each subject was coated on a 50mmx50mm stainless steel plate (SUS304). Then, immediately, ozone water obtained from Examples 3 and 17 was sprayed to each subject using a commercially available spray, and such sprayed ozone water was left to contact bacillus cereus for 5 minutes and colon bacillus for one minute respectively and then each surface was wiped up with a sterilized swab. Then the swab was immersed in SCDLP medium (manufactured by Nihon Pharmaceutical Co., Ltd.) to which 3.3% sodium thiosulfate aqueous solution was added, allowing attached substance to be dispersed sufficiently. After culturing the dispersed substance for 48 hours at 37 degrees Celsius, bacterial growth was evaluated in accordance with the criteria as below.

○:Completely disinfected (Bacterial growth not observed)
×:Disinfection imperfect (Bacterial growth observed)

As a result, it was confirmed that according to the present Examples, perfect disinfection (sterilization) was achieved, with no bacterial growth observed.

Table 8: Disinfection Results

| production condition of ozone water | electric current (A) | water flow rate (ml/min) | ozone concentration (ppm) | results | remaraks |
|---|---|---|---|---|---|
| Example 3 | 1.67 | 230 | 2.9 | ○ | single stack |
| Example 17 | 1.67 | 170 | 5.8 | ○ | two stack |

Example 26

The membrane-electrode assembly and the electrolytic cell described in Example 1 were used, except that applied solid polymer electrolyte membrane was Nafion 117 (Trade Name, Trademark Registered by Du Pont). As raw material water, solution was prepared in such a manner as amaranth, a red-color dye, was dissolved, as substance to be treated, at 100ppm, in pure water (ion-exchange water). Since the diamond anode used in the present Example enables to decompose various compounds including endocrine disrupting chemicals and pesticides, candidate materials to be treated should not be limited to the material applied in this Example.

The raw material water 500ml was poured into an Erlenmeyer flask with open top and kept at 20 degrees Celsius. The water was introduced to the electrolytic cell at 70ml/min., from the anode side to the cathode side, returning to the Erlenmeyer flask. Using a DC constant current device, the electrolytic cell was charged at 2.0A

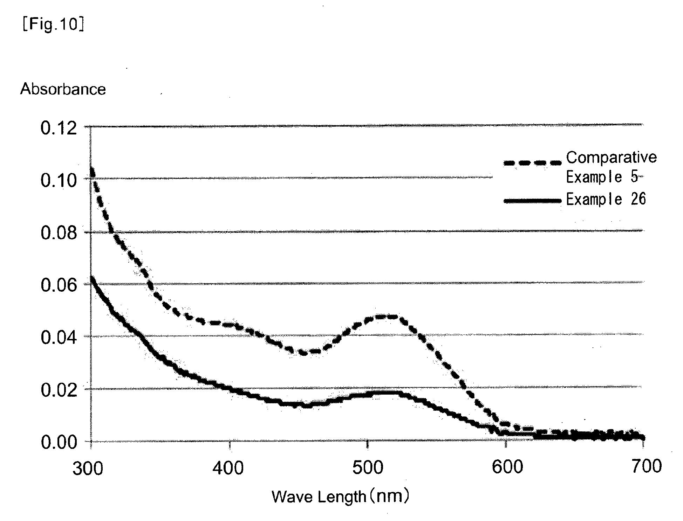

At 0.5, 1.0, and 1.5 hours after the start of electrolysis, a 5ml each of solution was sampled from the Erlenmeyer flask for photo-spectrum measurement by a UV-visible spectrophotometer (Model UV-2500 PC manufactured by Shimazu Corp.) in the wave range of 300-700nm. Fig.10 illustrates an absorption spectrum of amaranth after the lapse of 0.5 hours. The smaller was the absorbance, the smaller was the amaranth concentration.

Using the absorption spectrum around 521 nm wave length, a calibration curve was prepared based on the absorbance of the diluted original raw material water so as to determine the amaranth concentration was determined for the development in 0.5 hour lapse. The resulting amaranth concentration was 4.7ppm.

The amaranth concentration decreased with time and in 1.5 hourlapse, the color almost faded and the concentration was reduced to 0.3ppm. From the analysis of decomposition products, it was confirmed that low-molecular weight compounds of amaranth decomposition products, such as $CO_3^{2-}$ and oxalic acid had been formed.

Comparative Example 5

Comparative Example 5 was conducted with the raw material water and the electrolysis method and the measuring method described in Example 26, except that the membrane-electrode assembly and the electrolytic cell described in Comparative Example 1 (no membrane hole, flow of raw material water in parallel with anode and cathode) were used. Fig.10 illustrates an absorption spectrum of amaranth after a lapse of 0.5 hours. The smaller was the absorbance, the smaller was the amaranth concentration.

The amaranth concentration was determined for the development in 0.5 hour lapse. The resulting concentration was 10.9ppm. The amaranth concentration decreased with time and in 1.5 hours lapse, color almost faded and the concentration was reduced to 0.3ppm. From the analysis of decomposition products, it was confirmed that low-molecular weight compounds of amaranth decomposition products, such as $CO_3^-$ and oxalic acid had been formed.

From Fig.10, it is apparent that the decreasing rate of amaranth concentration in Example 26 is remarkably larger than Comparative Example 5.

**Industrial Applicability**

Since the ozone water production apparatus by the present invention can be disposed in an extremely small width in longitudinal direction at the middle of fluid piping being available, the channel pressure drop can be minimized, which enables a compact and small equipment design. Moreover, the unit comprising anode, cathode, and solid polymer electrolyte membrane can be stacked, as required, to construct electrolytic cells. The availability of easy expansion of equipment capacity achieves a further compact design without sacrificing production capacity. This feature facilitates a commercial design of small-size unit of the ozone water production apparatus, assuming retro-fit installation to a public tap water line. Moreover, the ozone water production apparatus by the present invention is also suitable as a throw-in type unit, which is an easy-detachable and portable electrolytic cell equipped in a water-filled vessel. Furthermore, water can be circulated by a pump combined with the unit; or as a structurally simplified, practically effective throw-in type unit, such configuration is recommended that the electrolytic cell, with open inlet and outlet ports, is installed in such a manner that the raw material water flows in parallel with the gravity direction and a convection-inducing tube is installed on the outlet side of the unit in order to utilize natural convection from rising ozone gas and oxygen and hydrogen gases formed together with ozone gas by electrolysis. In addition, the ozone water production method and the ozone water production apparatus by the present invention can widen the practicable range in various applications by being combined with existing technologies. One example is as follows. As ozone decomposes easily in water, the concentration of it sharply decreases with lapse of time; in order to prolong the service life of ozone water, a production system of nano-bubble ozone water is proposed. This type of the production system is realized by incorporating, for example, an ultrasonic generator as part of the ozone water production apparatus by the present invention. In this case, if cathode or anode is utilized as the ultrasonic transmission plate, the function can be added without sacrificing the size of the apparatus. As a means to obtain ozone water stably, dissolving carbon dioxide gas in raw material water or produced ozone water is proposed. Such system can be easily developed, if the ozone water production method and the ozone water production apparatus by the present invention are combined.

In addition, the present invention can be well utilized for various applications, such as organic electrolytic synthesis, decomposition of organic chlorine compounds containing dioxin, waste fluid treatment, treatment of river water for drinking in developing countries, and ozone water production.

**Reference Signs List**

| | |
|---|---|
| 1: | anode |
| 2: | cathode |
| 3: | solid polymer electrolyte membrane |
| 4, 5: | current-carrying member |
| 6, 7: | power cord |
| 8: | electrolytic cell |
| 8': | membrane-electrode assembly |
| 9: | anode compartment |
| 10: | cathode compartment |
| 11: | through-holes |
| 12: | raw material water inlet pipe |
| 13: | ozone water outlet pipe |

14:     inlet port
15:     outlet port
16:     area limiting ring
17:     convection-inducing tube
18:     treatment tank
19:     tap water faucet
20:     electrolytic cell
20':    membrane-electrode assembly
21:     anode
22:     cathode
23:     solid polymer electrolyte membrane
24:     screw
25:     current-carrying member

**Claims**

1.  An ozone water production apparatus comprising an electrolytic cell comprising a membrane-electrode assembly, said membrane-electrode assembly comprising: a solid polymer electrolyte membrane comprising a cation exchange membrane, an anode and a cathode tightly adhered to the respective surfaces of the solid polymer electrolyte membrane, wherein a plurality of through-holes with 0.1 mm or more in diameter is provided over the entire surfaces of the anode, the solid polymer electrolyte membrane and the cathode, passing through these members,
    said electrolytic cell comprising a current-carrying member that is provided to the anode and the cathode of the membrane-electrode assembly;
    wherein a means to supply raw material water in right angle direction or oblique direction to the surfaces of the anode, the solid polymer electrolyte membrane and the cathode is provided on one of the anode and the cathode of said electrolytic cell; and a means to discharge ozone water produced by the electrolytic cell in right angle direction or oblique direction to the surfaces of the anode, the solid polymer electrolyte membrane and the cathode is provided to the other of the anode and the cathode.

2.  The ozone water production apparatus according to claim 1, wherein conductive diamond, lead dioxide, noble metal and/or noble metal compounds are applied as anodic catalyst for the anode.

3.  The ozone water production apparatus according to claim 1 or 2, wherein said electrolytic cell comprises a plurality of said membrane-electrode assembly stacked with the current-carrying member provided to the anode and the cathode.

4.  The ozone water production apparatus according to any one of claims 1 to 3, **characterized in that** a means to supply raw material water in right angle direction or oblique direction to the surfaces of the anode, the solid polymer electrolyte membrane and the cathode is provided on the anode of the electrolytic cell; a convection-inducing tube to discharge ozone water produced by the electrolytic cell in right angle direction or oblique direction to the surfaces of the anode, the solid polymer electrolyte membrane and the cathode is provided on the cathode; and the electrolytic cell is put in a treatment liquor tank so that the electrolytic cell is operated by natural convection associated with hydrogen, oxygen and ozone gases generated at the cathode and the anode.

5.  The ozone water production apparatus according to any one of claims 1 to 4, wherein the electrolytic cell is installed to a faucet of tap water or a discharge port of non-purified waters of a similar kind.

6.  A method for producing ozone water by using the electrolytic cell as defined in claim 1 or 3, **characterized in that** raw material water is passed from either the anode or the cathode in right angle direction or oblique direction to the surfaces of the anode, the solid polymer electrolyte membrane and the cathode.

7.  The method for producing ozone water according to claim 6, wherein water containing a trace amount of alkali metal ions or alkaline earth metal ions is used as raw material water, the raw material water is supplied from anode side to the cathode side and passed in right angle direction or oblique direction to the surfaces of the anode, the solid polymer electrolyte membrane and the cathode so that deposition of hydroxide precipitate on the cathode and the membrane is restrained.

8. A disinfection method comprising producing ozone water according to the method of claim 6 or 7, and disinfecting treatment water using said ozone water.

9. The disinfection method according to claim 8, comprising using the electrolytic cell as defined in claim 1 or 3 and applying treatment water for disinfection as raw material water, the treatment water is passed for disinfection from either the anode or the cathode in right angle direction or oblique direction to the surfaces of the anode, the solid polymer electrolyte membrane and the cathode.

10. A wastewater or waste fluid treatment method comprising producing ozone water according to the method of claim 6 or 7, and treating wastewater or waste fluid using said ozone water.

11. The wastewater or waste fluid treatment method according to claim 10, comprising using the electrolytic cell as defined in claim 1 or 3 and applying wastewater or waste fluid as raw material water, the treatment water is passed for treatment from either the anode or the cathode in right angle direction or oblique direction to the surfaces of the anode, the solid polymer electrolyte membrane and the cathode.

**Patentansprüche**

1. Vorrichtung zur Bildung von Ozonwasser, umfassend eine Elektrolysezelle, die eine Membran-Elektroden-Baugruppe umfasst, wobei die Membran-Elektroden-Baugruppe folgendes umfasst: eine feste Polymerelektrolyt-Membran, umfassend eine Kationenaustausch-Membran, eine Anode und eine Kathode, die fest an den entsprechenden Oberflächen der festen Polymerelektroyt-Membran haften, wobei eine Vielzahl von Durchgangsbohrungen mit einem Durchmesser von 0,1 mm oder mehr über die gesamten Oberflächen der Anode, der festen Polymerelektrolyt-Membran und der Kathode bereitgestellt werden, die durch diese Elemente hindurchführen, wobei die Elektroylsezelle ein stromführendes Element umfasst, das an der Anode und der Kathode der Membran-Elektroden-Baugruppe bereitgestellt wird, wobei ein Mittel zum Zuleiten von Rohwasser in Richtung eines rechten Winkels oder in schräger Richtung zu den Oberflächen der Anode, der festen Polymerelektrolyt-Membran und der Kathode an einer der Anode oder der Kathode der Elektrolysezelle bereitgestellt wird; und ein Mittel zum Ableiten von von der Elektrolysezelle gebildetem Ozonwasser in Richtung eines rechten Winkels oder in schräger Richtung zu den Oberflächen der Anode, der festen Polymerelektrolyt-Membran und der Kathode an dem anderen, der Anode oder der Kathode bereitgestellt wird.

2. Vorrichtung zur Bildung von Ozonwasser nach Anspruch 1, wobei leitfähiger Diamant, Bleidioxid, Edelmetall und/oder Edelmetall-Verbindungen als Anoden-Katalysator für die Anode verwendet werden.

3. Vorrichtung zur Bildung von Ozonwasser nach Anspruch 1 oder 2, wobei die Elektrolysezelle eine Vielzahl von Membran-Elektroden-Baugruppen umfasst, die mit dem stromführenden Element gestapelt sind, das an der Anode und der Kathode bereitgestellt wird.

4. Vorrichtung zur Bildung von Ozonwasser nach einem der Ansprüche 1 bis 3, **dadurch gekennzeichnet, dass** das Mittel zum Zuleiten von Rohwasser in Richtung eines rechten Winkels oder in schräger Richtung zu den Oberflächen der Anode, der festen Polymerelektrolyt-Membran und der Kathode an der Anode der Elektrolysezelle bereitgestellt wird; ein Konvektion induzierendes Rohr zum Ableiten von von der Elektrolysezelle gebildetem Ozonwasser in Richtung eines rechten Winkels oder in schräger Richtung zu den Oberflächen der Anode, der festen Polymerelektrolyt-Membran und der Kathode an der Kathode bereitgestellt wird; und die Elektrolysezelle in einen Behälter zur Flüssigkeitsaufbereitung eingesetzt wird, so dass die Elektrolysezelle durch eine natürliche Konvektion, die mit Wasserstoff, Sauerstoff und an der Kathode und der Anode erzeugten Ozongasen in Zusammenhang steht, betrieben wird.

5. Vorrichtung zur Bildung von Ozonwasser nach einem der Ansprüche 1 bis 4, wobei die Elektrolysezelle an einem Wasserhahn von Leitungswasser oder einem Auslaufstutzen gleicher Art von nicht-gereinigtem Wasser angebracht ist.

6. Verfahren zur Bildung von Ozonwasser durch Verwenden der wie in Anspruch 1 oder 3 definierten Elektrolysezelle, **dadurch gekennzeichnet, dass** Rohwasser von entweder der Anode oder der Kathode in Richtung eines rechten Winkels oder in schräger Richtung zu den Oberflächen der Anode, der festen Polymerelektrolyt-Membran und der Kathode durchgeleitet wird.

**7.** Verfahren zur Bildung von Ozonwasser nach Anspruch 6, wobei Wasser, das eine Spurenkonzentration von Alkalimetallionen oder Erdalkalimetallionen enthält, als Rohwasser verwendet wird, wobei das Rohwasser von der Anodenseite zu der Kathodenseite zugeleitet und in Richtung eines rechten Winkels oder in schräger Richtung zu den Oberflächen der Anode, der festen Polymerelektrolyt-Membran und der Kathode durchgeleitet wird, so dass die Ablagerung von Hydroxid-Präzipitat an der Kathode und der Membran eingeschränkt wird.

**8.** Verfahren zur Desinfektion, umfassend die Bildung von Ozonwasser gemäß dem Verfahren des Anspruchs 6 oder 7, und Desinfizieren von Aufbereitungswasser unter Verwenden des Ozonwassers.

**9.** Verfahren zu Desinfektion nach Anspruch 8, umfassend das Verwenden einer wie in Anspruch 1 oder 3 definierte Elektrolysezelle und Verwenden von Aufbereitungswasser zur Desinfektion als Rohwasser, wobei das Aufbereitungswasser zur Desinfektion von entweder der Anode oder der Kathode in Richtung eines rechten Winkels oder in schräger Richtung zu den Oberflächen der Anode, der festen Polymerelektrolyt-Membran und der Kathode durchgeleitet wird.

**10.** Verfahren zur Aufbereitung von Abwasser oder Abfallflüssigkeit, umfassend das Bilden von Ozonwasser gemäß dem Verfahren des Anspruchs 6 oder 7, und Aufbereiten des Abwassers oder der Abfallflüssigkeit unter Verwenden des Ozonwassers.

**11.** Verfahren zur Aufbereitung von Abwasser oder Abfallflüssigkeit nach Anspruch 10, umfassend das Verwenden einer wie in Anspruch 1 oder 3 definierten Elektrolysezelle und Zuleiten von Abwasser oder Abfallflüssigkeit als Rohwasser, wobei das Aufbereitungswasser zur Aufbereitung von entweder der Anode oder der Kathode in Richtung eines rechten Winkels oder in schräger Richtung zu den Oberflächen der Anode, der festen Polymerelektrolyt-Membran und der Kathode durchgeleitet wird.

**Revendications**

**1.** Dispositif de production d'eau ozonisée comprenant une cellule électrolytique comprenant un assemblage de membrane-électrodes,
ledit assemblage de membrane-électrodes comprenant : une membrane d'électrolyte polymère solide comprenant une membrane échangeuse de cations, une anode et une cathode adhérant étroitement aux surfaces respectives de la membrane d'électrolyte polymère solide, une pluralité de trous traversant présentant un diamètre de 0,1 mm ou plus étant formés sur toutes les surfaces de l'anode, de la membrane d'électrolyte polymère solide et de la cathode, en passant à travers ces éléments,
ladite cellule électrolytique comprenant un élément de transport de courant qui est fourni à l'anode et à la cathode de l'assemblage de membrane-électrodes ;
dans lequel un moyen pour fournir de l'eau matière première dans une direction à angle droit ou une direction oblique par rapport aux surfaces de l'anode, de la membrane d'électrolyte polymère solide et de la cathode est disposé au niveau de l'une parmi l'anode et la cathode de ladite cellule électrolytique ; et un moyen pour décharger l'eau ozonisée produite par la cellule électrolytique dans une direction à angle droit ou une direction oblique par rapport aux surfaces de l'anode, de la membrane d'électrolyte polymère solide et de la cathode est disposé au niveau de l'autre parmi l'anode et la cathode.

**2.** Dispositif de production d'eau ozonisée selon la revendication 1, dans lequel du diamant conducteur, du dioxyde de plomb, un métal noble et/ou des composés de métal noble sont appliqués en tant que catalyseur anodique pour l'anode.

**3.** Dispositif de production d'eau ozonisée selon la revendication 1 ou 2, dans lequel ladite cellule électrolytique comprend une pluralité desdits assemblages de membrane-électrodes empilés avec l'élément de transport de courant fourni à l'anode et à la cathode.

**4.** Dispositif de production d'eau ozonisée selon l'une quelconque des revendications 1 à 3, **caractérisé en ce qu'**un moyen pour fournir de l'eau matière première dans une direction à angle droit ou une direction oblique par rapport aux surfaces de l'anode, de la membrane d'électrolyte polymère solide et de la cathode est disposé sur l'anode de la cellule électrolytique ; un tube inducteur de convexion pour décharger l'eau ozonisée produite par la cellule électrolytique dans une direction à angle droit ou une direction oblique par rapport aux surfaces de l'anode, de la membrane d'électrolyte polymère solide et de la cathode est disposé sur la cathode ; et la cellule électrolytique est placée dans une cuve de liqueur de traitement de sorte que la cellule électrolytique fonctionne par connexion naturelle associée aux gaz hydrogène, oxygène et ozone générés au niveau de la cathode et de l'anode.

5. Dispositif de production d'eau ozonisée selon l'une quelconque des revendications 1 à 4, dans lequel la cellule électrolytique est installée au niveau d'un robinet d'eau du robinet ou d'un orifice d'évacuation d'eau non purifiées d'un type similaire.

6. Procédé pour produire de l'eau ozonisée par utilisation de la cellule électrolytique telle que définie dans la revendication 1 ou 3, **caractérisé en ce que** de l'eau matière première passe depuis soit l'anode soit la cathode dans une direction à angle droit ou une direction oblique par rapport aux surfaces de l'anode, de la membrane d'électrolyte polymère solide et de la cathode.

7. Procédé pour produire de l'eau ozonisée selon la revendication 6, dans lequel de l'eau contenant des quantités en traces d'ions de métal alcalin ou d'ions de métal alcalino-terreux est utilisée en tant qu'eau matière première, l'eau matière première est fournie depuis le côté anode vers le côté cathode et passe dans une direction à angle droit ou une direction oblique par rapport aux surfaces de l'anode, de la membrane d'électrolyte polymère solide et de la cathode de sorte que la déposition de précipité hydroxyde sur la cathode et la membrane soit limitée.

8. Procédé de désinfection comprenant la production d'eau ozonisée selon le procédé de la revendication 6 ou 7, et un traitement de désinfection de l'eau utilisant ladite eau ozonisée.

9. Procédé de désinfection selon la revendication 8, comprenant l'utilisation de la cellule électrolytique telle que définie dans la revendication 1 ou 3 et l'application d'eau de traitement pour désinfection en tant qu'eau matière première, l'eau de traitement passant pour la désinfection depuis soit l'anode soit la cathode dans une direction à angle droit ou une direction oblique par rapport aux surfaces de l'anode, de la membrane d'électrolyte polymère solide et de la cathode.

10. Procédé de traitement d'eaux usées ou de fluides usés comprenant la production d'eau ozonisée selon le procédé de la revendication 6 ou 7, et le traitement des eaux usées ou des fluides usés utilisant ladite eau ozonisée.

11. Procédé de traitement d'eaux usées ou de fluides usés selon la revendication 10, comprenant l'utilisation de la cellule électrolytique telle que définie dans la revendication 1 ou 3 et 11 applications d'eaux usées ou de fluides usés en tant qu'eau matière première, l'eau de traitement passant pour le traitement depuis soit l'anode soit la cathode dans une direction à angle droit ou une direction oblique par rapport aux surfaces de l'anode, de la membrane d'électrolyte polymère solide et de la cathode.

[Fig.1]

[Fig.2-1]

[Fig.2-2]

[Fig.3]

[Fig.4]

[Fig.5]

[Fig.6]

Electolysis voltage(V)

[Fig.7]

[Fig.8]

[Fig.9]

[Fig.10]

Absorbance

## REFERENCES CITED IN THE DESCRIPTION

**Patent documents cited in the description**

- EP 0343122 A1
- EP 1111095 A1
- DE 10025167 A1
- JP 2009108395 A
- US 20070095655 A1
- EP 2017229 A1
- EP 0080288 A1
- JP A A
- JP 11269686 A
- JP 2005336607 A
- JP 9157900 A
- JP 10130876 A
- JP 2004060010 A
- JP 2002173789 A

- JP 2005177671 A
- JP 2008150665 A
- JP 2004285374 A
- JP 2008279341 A
- JP 11131276 A
- JP 2006281013 A
- JP 2002531704 A
- JP 2003126860 A
- JP 2004305290 A
- JP 2010064045 A
- JP 2009262079 A
- JP 6073584 A
- JP 2005246293 A
- JP 2003117570 A

**Non-patent literature cited in the description**

- Basic Study of Electrochemical Treatment of Ammonium Nitrogen-containing wastewater using Boron Doped Diamond Anode. *SEI Technical Review,* October 2007, 71

- *Measuring Methods of Ozone Concentration,* March 1994